# EUROPEAN PATENT APPLICATION

(11) **EP 4 766 011 A2**
(43) Date of publication of application: **24.06.2026**
(21) Application number: 26167491.5
(22) Date of filing: 24.12.2024
(51) Int. Cl.: H04W 84/12

(54) **MANAGING CONGESTION NOTIFICATIONS FOR LOW LATENCY, LOW LOSS, AND SCALABLE THROUGHPUT (L4S) DATA FLOWS**

(30) Priority: 26.12.2023 US 202363614899 P; 12.04.2024 US 202463633500 P; 13.12.2024 US 202418981406
(62) Divisional of application: 24838173.3
(71) Applicant: Cisco Technology, Inc., San Jose, CA 95134 (US)
(72) Inventor: GUPTA, Binita, San Jose, 95134 (US); ZUNIGA, Juan Carlos, San Jose, 95134 (US); HENRY, Jerome, San Jose, 95134 (US)
(74) Representative: Thomas, Tomos Daniel

(57) **Abstract**

Devices and methods for managing congestion notifications for Low Latency, Low Loss, and Scalable throughput (L4S) data flows are provided. A device receives a downstream data flow including multiple downstream data packets and identifies one or more downstream L4S data packets therefrom. The device stores the downstream L4S data packet(s) in a queue and detects a congestion in downstream based on the queue. The device transmits, at a lower protocol layer, an indication of the congestion to a wireless device that is a destination of the downstream L4S data packet(s). The wireless device marks at least one downstream L4S data packet with a congestion indicator based on the indication of the congestion. Such congestion indication provides a fast congestion notification associated with the L4S data flows to facilitate a fast response to the congestion and a reduction of congestion-related packet drops at the device.

## Description

### CROSS-REFERENCE TO RELATED APPLICATIONS

This application claims priority to U.S. Patent Application No. 18/981,406, filed December 13, 2024, which claims the benefit of and priority to U.S. Provisional Application No. 63/633,500, filed April 12, 2024; and U.S. Provisional Application No. 63/614,899, filed December 26, 2023, wherein the entirety of each are incorporated herein by reference.

### FIELD

The present disclosure relates to wireless communication. More particularly, the present disclosure relates to managing congestion notifications for Low Latency, Low Loss, and Scalable throughput (L4S) data flows.

### BACKGROUND

Wireless communication networks involve communication between multiple interconnected devices. For real-time or near-real-time applications, such as streaming video and multiplayer gaming, minimizing latency helps in maintaining a seamless user experience. For such applications, Low Latency, Low Loss, and Scalable throughput (L4S) may provide low queuing latency, low congestion loss, and scalable throughput control. L4S focuses on minimizing time spent by data packets in queues, thereby reducing overall latency experienced by the applications. L4S may also achieve low congestion loss based on its utilization of an Explicit Congestion Notification (ECN). Further, L4S provides a scalable throughput, thereby allowing the wireless communication networks to adapt to varying levels of demand from the devices.

In conventional systems, for implementing L4S, a dual queue architecture may be utilized. In the dual queue architecture, L4S traffic may be maintained in a separate shallow queue. Some conventional systems may also utilize a conditional priority scheduler to assign a higher priority to the L4S traffic. In some conventional systems, L4S may assume presence of a scalable congestion control mechanism at a source device that can maintain a consistently low average time between congestion signals as data flow rate scales. L4S may also require use of a packet identifier at an Internet Protocol (IP) layer to facilitate ECN signaling. However, in the conventional systems, there may be multiple delays associated with the ECN signaling. In the conventional systems, ECN-marked data packets may be queued and a congestion notification may be generated when the data packets are served. As a result, delays may occur due to one or more unserved data packets in the queue.

Further, the delays may also result from longer round-trip times between the source device and a destination device. Typically, the destination device may initiate ECN signaling which may be provided to the source device. However, the congestion may also occur at one or more intermediate devices, such as network devices, in a communication path between the source device and the destination device. In that case, the ECN signaling may be relayed through multiple devices before the source device or the destination device receives the congestion notification, thereby causing additional delay, which is undesirable.

### SUMMARY OF THE DISCLOSURE

Devices and methods for managing congestion notifications for Low Latency, Low Loss, and Scalable throughput (L4S) data flows in accordance with embodiments of the disclosure are described herein. In many embodiments, a device comprises a lower protocol layer configured for one or more Layer 2 operations, a higher protocol layer above the lower protocol layer, a processor, a memory communicatively coupled to the processor, and a congestion notification logic. The congestion notification logic is configured to receive a downstream data flow comprising a plurality of downstream data packets and identify one or more downstream L4S data packets from the plurality of downstream data packets. The congestion notification logic is further configured to store the one or more downstream L4S data packets in a queue, detect a congestion in downstream based on the queue, and transmit, at the lower protocol layer, an indication of the detected congestion to a wireless device that is a destination of the one or more downstream L4S data packets.

In various embodiments, the congestion notification logic is further configured to receive, at the lower protocol layer from the higher protocol layer, a service primitive signaling that indicates which downstream data packet among the plurality of downstream data packets is an L4S data packet. The one or more downstream L4S data packets are identified based on the service primitive signaling.

In yet various embodiments, the service primitive signaling corresponds to an MA-UNITDATA request primitive comprising at least one of an L4S parameter or an Explicit Congestion Notification (ECN) parameter.

In a variety of embodiments, detecting the congestion based on the queue comprises determining a count of the one or more downstream L4S data packets in the queue; and comparing the count of the one or more downstream L4S data packets with a threshold count. The congestion is detected based on the count of the one or more downstream L4S data packets exceeding the threshold count.

In a number of embodiments, in a case where the queue is maintained at the lower protocol layer, transmitting the indication of the detected congestion comprises updating a Media Access Control (MAC) Protocol Data Unit (MPDU) of at least one downstream L4S data packet of the one or more downstream L4S data packets with a congestion indication control field and transmitting the MPDU to the wireless device. The congestion indication control field comprises the indication of the detected congestion.

In various embodiments, the congestion indication control field is configured to indicate at least one of a value indicative of the congestion in the downstream, a count of downstream L4S data packets in the queue that are experiencing the congestion, an L4S congestion marking probability that indicates a likelihood that one or more L4S data packets should be marked for congestion, a percentage of downstream L4S data packets in the queue that are experiencing the congestion or should be marked for congestion, or a probability of congestion being experienced for the one or more downstream L4S data packets in the queue.

In more embodiments, the at least one downstream L4S data packet experiences the congestion in the queue.

In additional embodiments, in the queue, the at least one downstream L4S data packet is ahead of another downstream L4S data packet that experiences the congestion.

In one or more embodiments, the indication of the detected congestion is transmitted prior to transmitting the another downstream L4S data packet that experiences the congestion.

In further embodiments, the indication of detected congestion in the MPDU directs the wireless device to mark the at least one downstream L4S data packet with a congestion indicator.

In still more embodiments, the MPDU comprises one of a data frame, a management frame, or a control frame.

In still further embodiments, in a case where the MPDU comprises the management frame, the indication of the detected congestion is carried in a frame body of the management frame.

In still additional embodiments, the congestion indication control field is included in a Layer 2 header of the MPDU.

In some more embodiments, in a case where the queue is maintained at the higher protocol layer, the congestion in the downstream is detected at the higher protocol layer.

In yet various embodiments, the congestion notification logic is further configured to control the higher protocol layer to transmit a request to the lower protocol layer based on the detected congestion, and wherein based on the request, the indication of the detected congestion is transmitted in another downstream L4S packet that is queued for transmission at the lower protocol layer and is different from the one or more downstream L4S data packets stored in the queue.

In many further embodiments, a wireless device comprises a processor, a memory communicatively coupled to the processor, and a congestion notification logic configured to receive an indication of a congestion in a queue of a network device. The queue buffers one or more downstream L4S data packets of a downstream data flow, receive at least one downstream L4S data packet of the one or more downstream L4S data packets buffered in the queue, and mark the at least one downstream L4S data packet with a congestion indicator based on the indication of the congestion.

In many additional embodiments, the indication of the congestion is received through a congestion indication control field in one of an MPDU of the at least one downstream L4S data packet or a management frame.

In still yet additional embodiments, the wireless device further comprises a lower protocol layer and a higher protocol layer above the lower protocol layer. In several embodiments, the congestion notification logic is further configured to receive the indication of the congestion at the lower protocol layer, and mark the at least one downstream L4S data packet with the congestion indicator at the higher protocol layer.

In several more embodiments, the congestion indicator comprises an Explicit Congestion Notification indicator indicative of a Congestion Experienced value.

In numerous embodiments, the congestion notification logic is further configured to control the lower protocol layer to transmit a request to the higher protocol layer to mark the at least one downstream L4S data packet with the congestion indicator. In numerous additional embodiments, the at least one downstream L4S data packet is marked with the congestion indicator at the higher protocol layer based on the request.

In further additional embodiments, a method comprises receiving a downstream data flow comprising a plurality of downstream data packets; identifying one or more downstream L4S data packets from the plurality of downstream data packets; storing the one or more downstream L4S data packets in a queue; detecting a congestion in downstream based on the queue; and transmitting, at a lower protocol layer, an indication of the detected congestion to a wireless device that is a destination of the one or more downstream L4S data packets. The lower protocol layer performs one or more layer 2 operations.

Other objects, advantages, novel features, and further scope of applicability of the present disclosure will be set forth in part in the detailed description to follow, and in part will become apparent to those skilled in the art upon examination of the following or may be learned by practice of the disclosure. Although the description above contains many specificities, these should not be construed as limiting the scope of the disclosure but as merely providing illustrations of some of the presently preferred embodiments of the disclosure. As such, various other embodiments are possible within its scope. Accordingly, the scope of the disclosure should be determined not by the embodiments illustrated, but by the appended claims and their equivalents.

### BRIEF DESCRIPTION OF DRAWINGS

The above, and other, aspects, features, and advantages of several embodiments of the present disclosure will be more apparent from the following description as presented in conjunction with the following several figures of the drawings.
FIG. 1 is a schematic diagram of a wireless communication network illustrating classification of Low Latency, Low Loss, and Scalable throughput (L4S) data packets into queues and notification of congestion in the queues in accordance with various embodiments of the disclosure;
FIG. 2 is a schematic diagram of a wireless communication network illustrating forward signaling of congestion in an L4S data flow in accordance with various embodiments of the disclosure;
FIG. 3 is a conceptual network diagram of various environments in which a congestion notifier may operate on a plurality of network devices in accordance with various embodiments of the disclosure;
FIG. 4 is a block diagram of a system illustrating a forward signaling of downstream congestion detected in L4S queues implemented in a lower protocol layer in accordance with various embodiments of the disclosure;
FIG. 5 is a block diagram of a system illustrating a forward signaling of downstream congestion detected in L4S queues implemented in a higher protocol layer in accordance with various embodiments of the disclosure;
FIG. 6 is a schematic illustration of a control information field format for a forward signaling of downstream congestion in accordance with various embodiments of the disclosure;
FIG. 7A is a schematic illustration of another control information field format for a forward signaling of downstream congestion in accordance with various embodiments of the disclosure;
FIG. 7B is a schematic illustration of another control information field format for a forward signaling of downstream congestion in accordance with various embodiments of the disclosure;
FIG. 8 is a flowchart depicting a process for forward signaling of downstream congestion in accordance with various embodiments of the disclosure;
FIG. 9 is a flowchart depicting a process for forward signaling of downstream congestion in accordance with various embodiments of the disclosure;
FIG. 10 is a flowchart depicting a process for forward signaling of downstream congestion by utilizing a Media Access Control (MAC) Protocol Data Unit (MPDU) indication in accordance with various embodiments of the disclosure;
FIG. 11 is a flowchart depicting a process for forward signaling of downstream congestion by utilizing a congestion indication control field in accordance with various embodiments of the disclosure;
FIG. 12 is a flowchart depicting a process for marking an indication of downstream congestion in accordance with various embodiments of the disclosure; and
FIG. 13 is a conceptual block diagram of a device suitable for configuration with a congestion notification logic for implementing the functionality and various embodiments of the disclosure.

Corresponding reference characters indicate corresponding components throughout the several figures of the drawings. Elements in the several figures are illustrated for simplicity and clarity and have not necessarily been drawn to scale. For example, the dimensions of some of the elements in the figures may be emphasized relative to other elements for facilitating understanding of the various presently disclosed embodiments. In addition, common, but well-understood, elements that are useful or necessary in a commercially feasible embodiment are often not depicted to facilitate a less obstructed view of these various embodiments of the present disclosure.

### DETAILED DESCRIPTION

In response to the issues described above, devices and methods are discussed herein for managing congestion notifications for Low Latency, Low Loss, and Scalable throughput (L4S) data flows with reduced round-trip times and delays. In many embodiments, the devices and methods discussed herein may perform forward signaling of congestion in L4S data flows. Congestion in a network may relate to a heavy utilization of the network leading to delays and/or packet losses. To signal the congestion, a receiver that is made aware of the congestion in the network (for example, either by detecting the congestion itself or being informed of the congestion by a network device such as an access point), may transmit feedback to a sender to make the sender aware of the congestion. When the sender receives the feedback that indicates the congestion, the sender may, for example, reduce a data transmission rate to at least partially alleviate the congestion in the network. L4S may refer to an architecture and a protocol that provide low queuing latency, low congestion loss, and scalable throughput control for applications such as streaming video, multiplayer gaming, and other real-time and near-real-time applications. L4S may rely on an Explicit Congestion Notification (ECN) to provide high throughput and low latency for Internet Protocol (IP) traffic. ECN may refer to an extension to the IP and to the Transmission Control Protocol (TCP), that provides an end-to-end notification of the congestion in the network without dropping data packets. The dropping of the data packets by the TCP/IP may cause a retransmission delay that introduces latency which may be undesirable for low latency, high throughput applications in a cloud environment and other environments. Each retransmission may be time consuming and can cause an application to reduce the responsiveness to the congestion.

Unlike TCP/IP networks that signal congestion by dropping data packets, when ECN is successfully negotiated, an ECN-aware device may set a mark in an IP header of the data packet instead of dropping the data packet to signal an impending congestion. The receiver of the data packet may echo the congestion indication to the sender, which may reduce a data transmission rate as if the sender detected a dropped data packet. In a number of embodiments, the devices and methods discussed herein may provide a fast congestion notification for an L4S data flow to facilitate a fast response to the congestion and a reduction of congestion-related packet drops at a device, for example, an access point. The devices and methods discussed herein may signal L4S congestion experienced at the access point for L4S data flows, which may allow faster L4S congestion signaling leading to a faster response to the congestion and hence a reduction of congestion-related packet drops at the access point.

The devices and methods discussed herein provide a congestion notification for L4S data flows with reduced round-trip times and delays. In a variety of embodiments, an access point may be in communication with a plurality of wireless devices in a wireless communication network. Examples of the wireless devices can include electronic devices, such as, but not limited to, laptops, smartphones, computers, tablets, or the like. The wireless communication network may utilize, for example, 6 gigahertz (GHz), 5 GHz, or 2.4 GHz frequency bands, or millimeter wave (mmWave) frequencies. The access point can be wirelessly connected to the wireless devices by way of the IEEE 802.11 wireless communication technology, for example, Wi-Fi^{®} of the Wi-Fi Alliance Corporation. The wireless devices can be L4S-enabled wireless devices. The L4S data flows may be utilized to improve performance of real-time or near-real-time applications in the L4S-enabled wireless devices. Examples of the real-time or near-real-time applications can include interactive web, web services, voice, conversational video, interactive video, interactive remote presence, instant messaging, online and cloud-rendered gaming, remote desktop, cloud-based applications, cloud-rendered virtual reality or augmented reality, and video-assisted remote control of machinery and industrial processes. The access point can also be in communication with one or more network devices, such as, but not limited to, servers, routers, switches, or databases by way of wired and/or wireless communication networks.

In various embodiments, the access point can receive multiple data flows. The data flows may comprise one or more data packets. Typically, the data packets are enqueued or buffered in a queue before servicing or transmission of the data packets. A queue may refer to a buffer where data packets are temporarily stored before being transmitted. As the data packets arrive faster than they can be processed or transmitted, the data packets may accumulate in the queue. Delays can occur in the transmission of the data packets due to buffer bloat or when a sender transmits the data flows at a higher bit rate than what is supported by a communication network. Some data flows may utilize TCP which can utilize acknowledgment data packets to signal successful reception of the data packets. The acknowledgment data packets, in conjunction with a congestion window, may be utilized to detect a bottleneck. For the real-time or near-real-time applications, some data flows may utilize the ECN. The ECN may utilize one or more bits in a header of a data packet to indicate congestion. In more embodiments, for example, the one or more bits may be two least significant bits of a Traffic Class (TCLAS) field in an IP header. An access point may, instead of dropping the data packets, mark the data packets with a Congestion Experienced (CE) value in an ECN field of the IP header of the data packets. The L4S data flows can enhance the ECN by utilizing the one or more bits to signal that the data flows support L4S. This enhanced ECN may provide a scalable congestion control technique in which the congestion window or data transmission rate may be reduced proportionally based on the data packets marked with the CE value.

In additional embodiments, for example, the L4S data flows may be the data flows that indicate the L4S capability in the one or more bits, that is, the ECN bits, in the header of the data packets. In further embodiments, for example, the L4S data flows can be the data flows that are indicative of real-time, near-real-time, or latency-sensitive data flows. In still more embodiments, for example, the L4S data flows can be the data flows that can support one or more scalable congestion control techniques such as the ECN. In still further embodiments, for example, the L4S data flows can be the data flows that can support early congestion detection and notification. In still additional embodiments, for example, the L4S data flows may be the data flows in which the sender may continually or dynamically adapt the data transmission rate based on the congestion.

L4S may allow isolation of network traffic in separate queues. In some more embodiments, the access point can enqueue the data flows, including L4S data flows and non-L4S data flows in both: upstream and downstream. "Upstream" may refer to a direction of a data flow from a station (herein referred to as a "STA"), for example, a client device, to a remote system, for example, a destination server. "Downstream" may refer to a direction of data flow from the remote system to the STA. To enqueue the data flows, the access point may utilize a dual queue system. The access point may also utilize an Active Queue Management (AQM) system to actively detect and notify a congestion associated with the L4S data flows. In yet various embodiments, a queuing mechanism can be implemented in firmware of the access point. In yet more embodiments, a queuing mechanism can be implemented on a host. The firmware may implement the queuing mechanism by utilizing hardware, such as, but not limited to, Wi-Fi^{®} chipsets or wireless network cards. In still yet more embodiments, the queuing mechanism can be implemented in an operating system of the access point. The operating system may provide flexibility in managing the queuing mechanism, which may include, for example, dynamically changing threshold data packets for different queues, dynamically selecting and scheduling data packets for transmission, assigning and/or modifying priorities for the queues, etc. In many further embodiments, the queuing mechanism can implement a dual queue-coupled AQM including a classic queue and a low latency queue. The low latency queue may be an L4S queue for storing one or more L4S data packets. The classic queue can store one or more non-L4S data packets. In many additional embodiments, the access point may include separate queues for data flows of different types, such as, but not limited to, voice, video, best effort, or background. In still yet further embodiments, the access point can include separate L4S queues for different types of low latency data flows such as, but not limited to, video and best effort. The queuing mechanism may prioritize transmission of the L4S data packets in the L4S queue over the non-L4S data packets in the classic queue. The queuing mechanism can further utilize the ECN for notifying congestion in the L4S data flows.

If congestion is detected in a queue, there is a need to either wait for subsequent data packets that can be marked with the ECN as ECN marking may be implemented at a higher protocol layer, for example, layer 3, or dequeue the data packets and transmit the data packets to the higher protocol layer for marking. The present disclosure addresses this issue by signaling the congestion in the already queued data packets, for example, using layer 2 signaling, thereby saving time and providing a faster response to the congestion experienced at the access point. The devices and methods discussed herein may allow signaling of L4S congestion in a forward direction for faster congestion notification. In still yet additional embodiments, the devices and methods discussed herein may allow layer 2 signaling of L4S congestion in a forward direction for faster congestion notification.

The devices and methods discussed herein may perform forward signaling of congestion in L4S data flows. A device, for example, an access point, may receive a downstream data flow including a plurality of downstream data packets. In several embodiments, the downstream data flow may be indicative of real-time data or near-real time data. In several more embodiments, the downstream data flow can be indicative of high priority data or latency sensitive data. The access point may identify one or more downstream L4S data packets from the plurality of downstream data packets and store the downstream L4S data packet(s) in a queue. The queue may buffer one or more downstream L4S data packets of the downstream data flow. The access point may detect a congestion in downstream based on the queue. The access point may transmit, at a lower protocol layer that can perform one or more Layer 2 operations, an indication of the detected congestion to a wireless device, for example, an STA, that is a destination of the one or more downstream L4S data packets.

In numerous embodiments, the queue may be maintained at the lower protocol layer and the congestion may be detected at the lower protocol layer. The lower protocol layer may be layer 2 including a MAC sublayer. In such embodiments, to transmit the indication of the detected congestion, the access point may update a Media Access Control (MAC) Protocol Data Unit (MPDU) of at least one downstream L4S data packet of the one or more downstream L4S data packets stored in the queue with a congestion indication control field and transmit the MPDU to the STA. The congestion indication control field may include the indication of the detected congestion. The congestion indication control field may be configured to include a value indicative of the congestion in the downstream. The congestion indication control field may be further configured to include a count of downstream L4S data packets in the queue that are experiencing the congestion, a percentage of downstream L4S data packets in the queue that are experiencing the congestion, or a probability of congestion being experienced for the one or more downstream L4S data packets in the queue. In many further embodiments, the congestion indication control field may be included in a MAC header of the MPDU. For example, the MAC header can include a High Throughput (HT) control field to transmit control information, which may be utilized to signal the congestion. In many additional examples, the MAC header of the MPDU may include a High Efficiency Aggregated Control (HE A-Control) field that can be utilized to signal the congestion. In still yet further examples, the MPDU can include a separate "L4S congestion indication" control field that can be utilized to signal the congestion. In still yet additional embodiments, the congestion indication control field may be indicative of a predetermined value that can indicate whether a corresponding L4S queue experiences congestion. In several embodiments, the congestion indication control field can be utilized to transmit the count of the L4S data packets in the corresponding L4S queue. In some embodiments, the at least one downstream L4S data packet whose MPDU is updated with the congestion indication control field may be experiencing the congestion in the queue. In some more embodiments, the at least one downstream L4S data packet, whose MPDU is updated with the congestion indication control field, itself may not be experiencing the congestion but may be ahead of another downstream L4S data packet that is experiencing the congestion. In such embodiments, the indication of the detected congestion is transmitted prior to transmitting the another downstream L4S data packet that experiences the congestion. After transmitting the indication of the detected congestion, the access point may also transmit the downstream L4S data packet(s) that are experiencing the congestion to the STA. In some additional embodiments, the indication of the congestion is transmitted to the STA through a congestion indication control field in a management frame.

In many further embodiments, the L4S queue may be maintained at the higher protocol layer such as layer 3, layer 4, or the like. In such embodiments, the lower protocol layer may include one or more transmit queues in which downstream data packets are queued for transmission. In a case where the L4S queue may be maintained at the higher protocol layer, the congestion may be detected at the higher protocol layer. Upon detecting the congestion at the higher protocol layer, in yet more embodiments, the access point may generate, at the higher protocol layer, a request indicative of the congestion in the L4S data flows and provide the request to the lower protocol layer. Based on the request, the indication of the detected congestion is transmitted in another downstream L4S packet that is queued for transmission at the lower protocol layer in the transmit queue and is different from the one or more downstream L4S data packets stored in the L4S queue. In other words, the indication of the detected congestion is transmitted prior to transmitting the one or more downstream L4S data packets that are experiencing the congestion for faster congestion signaling.

The STA may receive the indication of the detected congestion in the queue of the access point. The STA may also receive at least one downstream L4S data packet buffered in the queue. In further additional embodiments, the STA may receive the indication of the congestion through a congestion indication control field in an MPDU of a downstream L4S data packet or a management frame. The STA may then mark the received downstream L4S data packet with a congestion indicator based on the indication of the congestion. In many embodiments, the congestion indication control field may be indicative of a packet count for marking with the congestion indicator, the percentage of downstream L4S data packets in the queue that are experiencing the congestion, or the probability of congestion being experienced for the one or more downstream L4S data packets in the queue. The downstream L4S data packet may be marked with the congestion indicator further based on the packet count.

In a number of embodiments, the access point may monitor one or more counts of the L4S data packets in the L4S queues. In various embodiments, the queuing mechanism can periodically poll the L4S queues to check status and detect congestion events. In more embodiments, the queuing mechanism may receive asynchronous notifications indicative of a change in queue status or an occurrence of the congestion events. In additional embodiments, the access point may determine a threshold count of data packets associated with each L4S queue. In further embodiments, the threshold count can be determined based on one or more of: type of the data packets, priority of the data packets, Quality of Service (QoS) parameters of the data packets, etc. In still more embodiments, for example, the access point can dynamically change or modify the threshold count of data packets based on network conditions, network demand, QoS requirements, etc. In still further embodiments, for example, the threshold count may be predetermined for different types of L4S queues. In still additional embodiments, the threshold count may be configurable by an operator. In some more embodiments, the threshold count can be different for different L4S data flows associated with different applications implemented by the same source device. In yet various embodiments, the threshold count can be optimized based on network requirements by utilizing empirical tuning or Machine Learning (ML) techniques, etc. The access point can compare the count of the L4S data packets in the L4S queue with a corresponding threshold count associated with the L4S queue. If the count of the L4S data packets in the L4S queue exceeds the threshold count, the access point may determine the occurrence of the congestion in the L4S queue.

In still yet more embodiments, for downstream L4S data flows received from the destination server, the access point may detect the congestion based on the status of the queue. The STA can receive the MPDU and determine the congestion of the corresponding L4S queue based on the predetermined value. The STA may also receive the MPDU and extract the count of the L4S data packets in the corresponding L4S queue. The STA can utilize the count of the data packets to determine the status of the corresponding L4S queue or the occurrence of the congestion in the corresponding L4S queue.

In numerous embodiments, the access point can utilize the MPDU comprising the congestion indication control field to signal, to the STA, about the congestion in the downstream L4S data flows associated with the STA. Similarly, the access point can insert the congestion indicator in the downstream data packets for indicating the congestion in the downstream directions of the data flows.

In many embodiments, the devices and methods discussed herein can signal congestion at the access point before or at the time of transmitting the data packets that experience the congestion. The access point can also notify the congestion in both upstream and downstream data flows. In a number of embodiments, the access point may notify the congestion to the STA by way of layer 2 signaling. The devices and methods discussion herein may reduce a time required for notifying the congestion to the STA and the destination server, thereby improving efficiency of the wireless communication network.

Aspects of the present disclosure may be embodied as an apparatus, a system, a method, or a computer program product. Accordingly, aspects of the present disclosure may take the form of an entirely hardware embodiment, an entirely software embodiment (including firmware, resident software, micro-code, or the like), or an embodiment combining software and hardware aspects that may all generally be referred to herein as a "function," a "module," an "apparatus," or a "system." Furthermore, aspects of the present disclosure may take the form of a computer program product embodied in one or more non-transitory computer-readable storage media storing computer-readable and/or executable program code. Many of the functional units described in this specification have been labeled as functions, to emphasize their implementation independence more particularly. For example, a function may be implemented as a hardware circuit comprising custom Very Large Scale Integration (VLSI) circuits or gate arrays, off-the-shelf semiconductors such as logic chips, transistors, or other discrete components. A function may also be implemented in programmable hardware devices such as via field programmable gate arrays, programmable array logic, programmable logic devices, or the like. As one example, there is provided a computer readable medium carrying instructions which, when executed by one or more processors, cause any of the methods described herein to be carried out.

Functions may also be implemented at least partially in software for execution by various types of processors. An identified function of executable code may, for instance, comprise one or more physical or logical blocks of computer instructions that may, for instance, be organized as an object, a procedure, or a function. Nevertheless, the executables of an identified function need not be physically located together but may comprise disparate instructions stored in different locations which, when joined logically together, comprise the function and achieve the stated purpose for the function.

A function of executable code may include a single instruction, or many instructions, and may even be distributed over several different code segments, among different programs, across several storage devices, or the like. Where a function or portions of a function are implemented in software, the software portions may be stored on one or more computer-readable and/or executable storage media. Any combination of one or more computer-readable storage media may be utilized. A computer-readable storage medium may include, for example, but not limited to, an electronic, magnetic, optical, electromagnetic, infrared, or semiconductor system, apparatus, or device, or any suitable combination of the foregoing, but would not include propagating signals. In the context of this document, a computer readable and/or executable storage medium may be any tangible and/or non-transitory medium that may contain or store a program for use by or in connection with an instruction execution system, an apparatus, a processor, or a device.

Computer program code for carrying out operations for aspects of the present disclosure may be written in any combination of one or more programming languages, including an object-oriented programming language such as Python, Java, Smalltalk, C++, C#, Objective C, or the like, conventional procedural programming languages, such as the "C" programming language, scripting programming languages, and/or other similar programming languages. The program code may execute partly or entirely on one or more of a user's computer and/or on a remote computer or server over a data network or the like.

A component, as used herein, comprises a tangible, physical, non-transitory device. For example, a component may be implemented as a hardware logic circuit comprising custom VLSI circuits, gate arrays, or other integrated circuits; off-the-shelf semiconductors such as logic chips, transistors, or other discrete devices; and/or other mechanical or electrical devices. A component may also be implemented in programmable hardware devices such as field programmable gate arrays, programmable array logic, programmable logic devices, or the like. A component may comprise one or more silicon integrated circuit devices (e.g., chips, die, die planes, packages, or the like) or other discrete electrical devices, in electrical communication with one or more other components through electrical lines of a Printed Circuit Board (PCB) or the like. Each of the functions and/or modules described herein, in a variety of embodiments, may alternatively be embodied by or implemented as a component.

A circuit, as used herein, comprises a set of one or more electrical and/or electronic components providing one or more pathways for electric current. In various embodiments, a circuit may include a return pathway for electric current, so that the circuit is a closed loop. In more embodiments, however, a set of components that does not include a return pathway for electric current may be referred to as a circuit (e.g., an open loop). For example, an integrated circuit may be referred to as a circuit regardless of whether the integrated circuit is coupled to ground (as a return pathway for electric current) or not. In additional embodiments, a circuit may include a portion of an integrated circuit, an integrated circuit, a set of integrated circuits, a set of non-integrated electrical and/or electrical components with or without integrated circuit devices, or the like. In further embodiments, a circuit may include custom VLSI circuits, gate arrays, logic circuits, or other integrated circuits; off-the-shelf semiconductors such as logic chips, transistors, or other discrete devices; and/or other mechanical or electrical devices. A circuit may also be implemented as a synthesized circuit in a programmable hardware device such as a field programmable gate array, a programmable array logic, a programmable logic device, or the like (e.g., as firmware, a netlist, or the like). A circuit may comprise one or more silicon integrated circuit devices (e.g., chips, die, die planes, packages) or other discrete electrical devices, in electrical communication with one or more other components through electrical lines of a PCB or the like. Each of the functions and/or modules described herein, in still more embodiments, may be embodied by or implemented as a circuit.

Reference throughout this specification to "one embodiment," "an embodiment," or similar language means that a particular feature, structure, or characteristic described in connection with the embodiment is included in at least one embodiment of the present disclosure. Thus, appearances of the phrases "in one embodiment," "in an embodiment," and similar language throughout this specification may, but do not necessarily, all refer to the same embodiment, but mean "one or more but not all embodiments" unless expressly specified otherwise. The terms "including," "comprising," "having," and variations thereof mean "including but not limited to", unless expressly specified otherwise. An enumerated listing of items does not imply that any or all the items are mutually exclusive and/or mutually inclusive, unless expressly specified otherwise. The terms "a," "an," and "the" also refer to "one or more" unless expressly specified otherwise.

Further, as used herein, reference to reading, writing, storing, buffering, and/or transferring data can include the entirety of the data, a portion of the data, a set of the data, and/or a subset of the data. Likewise, reference to reading, writing, storing, buffering, and/or transferring non-host data can include the entirety of the non-host data, a portion of the non-host data, a set of the non-host data, and/or a subset of the non-host data.

Lastly, the terms "or" and "and/or" as used herein are to be interpreted as inclusive or meaning any one or any combination. Therefore, "A, B, or C" or "A, B, and/or C" mean "any of the following: A; B; C; A and B; A and C; B and C; A, B, and C." An exception to this definition will occur only when a combination of elements, functions, steps, or acts are in some way inherently mutually exclusive.

Aspects of the present disclosure are described below with reference to schematic flowchart diagrams and/or schematic block diagrams of methods, apparatuses, systems, and computer program products according to embodiments of the disclosure. It will be understood that each block of the schematic flowchart diagrams and/or schematic block diagrams, and combinations of blocks in the schematic flowchart diagrams and/or schematic block diagrams, can be implemented by computer program instructions. These computer program instructions may be provided to a processor of a computer or other programmable data processing apparatus to produce a machine, such that the instructions, which execute via the processor or other programmable data processing apparatus, create means for implementing the functions and/or acts specified in the schematic flowchart diagrams and/or schematic block diagrams block or blocks.

It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. Other steps and methods may be conceived that are equivalent in function, logic, or effect to one or more blocks, or portions thereof, of the illustrated figures. Although various arrow types and line types may be employed in the flowchart and/or block diagrams, they are understood not to limit the scope of the corresponding embodiments. For instance, an arrow may indicate a waiting or monitoring period of unspecified duration between enumerated steps of the depicted embodiment.

In the following detailed description, reference is made to the accompanying drawings, which form a part thereof. The foregoing summary is illustrative only and is not intended to be in any way limiting. In addition to the illustrative aspects, embodiments, and features described above, further aspects, embodiments, and features will become apparent by reference to the drawings and the following detailed description. The description of elements in each figure may refer to elements of proceeding figures. Like numbers may refer to like elements in the figures, including alternate embodiments of like elements.

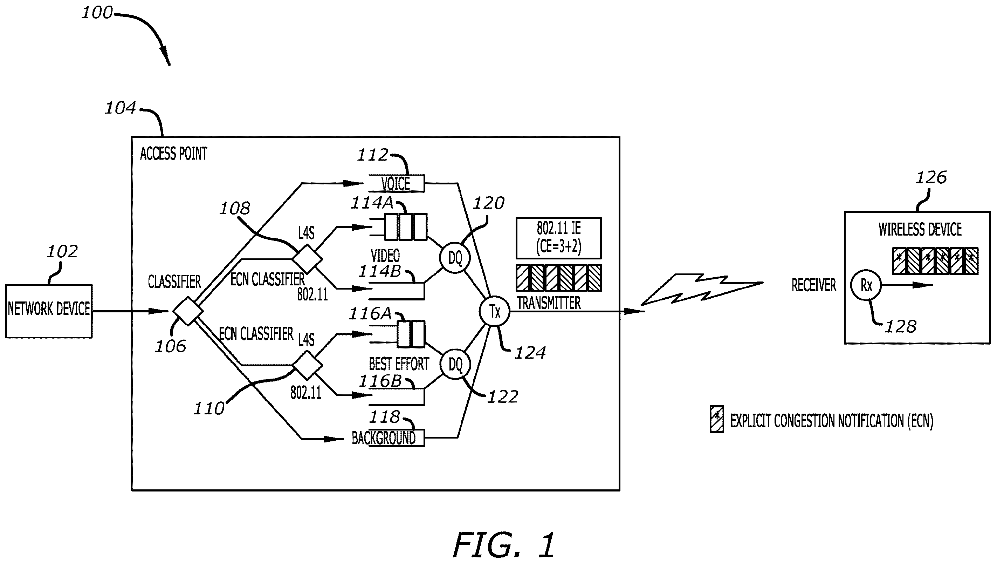

Referring to FIG. 1, a schematic diagram of a wireless communication network 100 illustrating classification of Low Latency, Low Loss, and Scalable throughput (L4S) data packets into queues and notification of congestion in the queues in accordance with various embodiments of the disclosure is shown. The embodiments illustrated in FIG. 1 are described in the context of managing congestion notifications for L4S data flows in the wireless communication network 100 including a network device 102, an access point 104, and a wireless device 126 as a non-limiting example. The network device 102 may refer to a server, for example, a destination server such as a cloud server, configured to receive or handle data being transmitted from a source, for example, the wireless device 126. The access point 104 may refer to a networking device that couples the wireless device 126 to a wired network, for example, a Local Area Network (LAN). The access point 104 may allow wireless devices to connect to the wired network by utilizing, for example, Wi-Fi^{®} or other wireless technologies. The access point 104 may act as a bridge between the wired network and the wireless devices, enabling the wireless devices to access the wired network, share resources, and communicate with other devices. The access point 104 may, for example, be one or more of a non-multi-link device (MLD) access point, an access point affiliated with an access point MLD, and/or an access point MLD.

The wireless device 126 may be a station referred to as a "STA" or any device including end-user devices or client devices such as laptops, tablets, smartphones, gaming consoles, dual-mode cellular phones, wireless Voice-over-Internet Protocol (VoIP) phones, mobile stations, personal digital assistants (e.g., converged devices that support WLAN data and/or voice, and cellular), wearable devices, other devices such as printers, Internet-of-Things (IoT) devices, or network infrastructure devices such as wireless mesh nodes, that can connect to the wireless communication network 100. The wireless device 126 can be in a client mode, acting as a client device. When acting as a client device, the wireless device 126 may connect to the access point 104 to gain access to the wireless communication network 100. The network device 102 may transmit network traffic, for example, L4S traffic, in a downstream direction towards the wireless device 126 via the access point 104. For the network traffic coming from the network device 102 and flowing in a downstream direction, herein referred to as a "downstream data flow", towards the wireless device 126, the network device 102 may be a source device and the wireless device 126 may be a destination device. For the network traffic coming from the wireless device 126 and flowing in an upstream direction, herein referred to as an "upstream data flow", towards the network device 102, the wireless device 126 may be the source device and the network device 102 may be the destination device.

In many embodiments, the access point 104 may include a classifier 106, Explicit Congestion Notification (ECN) classifiers 108 and 110, multiple queues 112 - 118, and a transmitter 124. In a number of embodiments, the classifier 106 may be a Differentiated Services (Diffserv)-based classifier. Differentiated Services may refer to a multiple service model that can satisfy differing QoS requirements. With differentiated services, the wireless communication network 100 may attempt to deliver a particular kind of service based on the QoS specified by each data packet, for example, using a 6-bit Differentiated Services Code Point (DSCP) setting in data packets or source and destination addresses. The access point 104 may utilize the QoS specification to classify, mark, shape, and police the network traffic and to perform intelligent queuing. In a variety of embodiments, the ECN classifiers 108 and 110 may be configured to classify network traffic of different types based on Differentiated Services Code Points (DSCP) or other packet markings, thereby allowing the ECN classifiers 108 and 110 to apply ECN markings to specific types of network traffic that needs congestion management.

In various embodiments, one or more of the queues 112 - 118 can be dual queues, where the network traffic may be classified, for example, into high priority queues 114A and 116A and low priority queues 114B and 116B for multiple traffic classes. The traffic classes may include, for example, voice, video, best effort, background, or the like. In more embodiments, the network traffic may be classified based on an ECN value in IP headers of the data packets. By way of a non-limiting example, the data packets with ECN = 01 or ECN = 11 in their IP headers may be stored in the L4S queues, for example, the L4S queues 114A and 116A, and the data packets with ECN = 00 or ECN = 10 in their IP headers may be stored in the non-L4S queues, for example, the non-L4S queues 114B and 116B. In additional embodiments, the queue 112 may be configured to store voice data, the queues 114A and 114B may be configured to store video data, the queues 116A and 116B may be configured to store best effort data, and the queue 118 may be configured to store background data. The background data may refer to data that one or more applications can transmit and/or receive when not active. In further embodiments, the background data may be non-L4S data, and the video data and the best effort data can be L4S data. For purposes of illustration, the present disclosure refers to the access point 104 including six single and dual queues 112 - 118 in combination; however, the scope of the devices and methods discussed herein is not limited to including six single and dual queues 112 - 118 but may extend to include any number of queues and levels and types of queues for multiple different traffic classes. The queues 114A and 114B may include, for example, an L4S queue 114A and a non-L4S/classic queue 114B, for storing the video data. The L4S queue 114A and the non-L4S/classic queue 114B may constitute a dual queue 120. Similarly, the queues 116A and 116B may include, for example, an L4S queue 116A and a non-L4S/classic queue 116B, for storing the best effort data. The L4S queue 116A and the non-L4S/classic queue 116B may constitute a dual queue 122. The dual queues 120 and 122 are operably coupled to the transmitter 124. In still more embodiments, the access point 104 may execute a queuing mechanism that prioritizes transmission of L4S data packets in the L4S queues 114A and 116A over the non-L4S data packets in the non-L4S queues 114B and 116B.

In still further embodiments, the classifier 106 may receive a plurality of data flows from the network device 102. The classifier 106 can be configured to classify the data flows into one or more traffic classes or categories, such as, but not limited to, voice, video, best effort, or background. The ECN classifier 108 may be configured to receive the video data comprising one or more video data packets. The ECN classifier 108 can be further configured to determine whether the video data packets are L4S data packets or non-L4S data packets. In still additional embodiments, a higher protocol layer (e.g., layer 3, layer 4, or the like) of the access point 104 may utilize a service primitive signaling (e.g., MA.UNITDATA.request primitive) to indicate to the lower protocol layer (e.g., layer 2 or MAC sublayer) of the access point 104 whether the video data packets are L4S data packets or non-L4S data packets. The MA-UNITDATA.request primitive may include at least one of an L4S parameter or an ECN parameter to indicate which data packet among a plurality of received data packets is an L4S data packet. For example, the ECN classifier 108 may receive an MA.UNITDATA.request service primitive for a first video data packet indicating that the first video data packet is an L4S data packet by way of the L4S parameter or the ECN parameter. In such an example scenario, based on the received MA.UNITDATA.request service primitive, the ECN classifier 108 may determine that the first video data packet is an L4S data packet. In another example, the ECN classifier 108 may receive an MA.UNITDATA.request service primitive for a second video data packet indicating that the second video data packet is a non-L4S data packet. In such an example scenario, based on the received MA.UNITDATA.request service primitive, the ECN classifier 108 may determine that the second video data packet is a non-L4S data packet. In some more embodiments, the L4S video data packets may include an ECN indicator in corresponding headers. The ECN indicator may be indicative of an ECN-capable Transport (ECT) value such as ECT(1) or a Congestion Experienced (CE) value. The higher protocol layers may be configured to parse the video data packets and determine the video data packets to be L4S data packets upon detecting the ECN indicator in one or more headers of the video data packets. The ECN classifier 108 can be further configured to store the L4S video data packets in the L4S queue 114A and the non-L4S video data packets in the non-L4S/classic queue 114B. In yet various embodiments, the access point 104 may determine a count of the L4S video data packets in the L4S queue 114A. In yet more embodiments, the access point 104 can determine a first threshold count associated with the L4S queue 114A. The access point 104 may determine the first threshold count, for example, based on the priority of the video data packets, QoS parameters of the video data packets, etc. The access point 104 can modify the first threshold count, for example, based on network conditions, network demand, QoS requirements, etc. The access point 104 can thereafter compare the count of the L4S video data packets in the L4S queue 114A with the first threshold count. The access point 104 may detect a congestion in the L4S queue 114A if the count of the L4S video data packets in the L4S queue 114A exceeds the first threshold count. By way of a non-limiting example, FIG. 1 illustrates three (3) L4S video data packets experiencing congestion in the L4S queue 114A.

Similarly, in still yet more embodiments, the ECN classifier 110 may be configured to receive the best effort data comprising one or more best effort data packets. The ECN classifier 110 can be further configured to determine whether the best effort data packets are L4S data packets or non-L4S data packets. In many further embodiments, the higher protocol layer (e.g., layer 3 or layer 4) of the access point 104 may utilize the service primitive signaling (e.g., MA.UNITDATA.request) to indicate to the lower protocol layer (e.g., layer 2 or MAC sublayer) whether the best effort data packets are L4S data packets or non-L4S data packets. For example, the ECN classifier 110 may receive an MA.UNITDATA.request service primitive for a first best effort data packet indicating that the first best effort data packet is an L4S data packet. In such an example scenario, based on the received MA.UNITDATA.request service primitive, the ECN classifier 110 may determine that the best effort data packet is an L4S data packet. In another example, the ECN classifier 110 may receive an MA.UNITDATA.request service primitive for a second best effort data packet indicating that the second best effort data packet is a non-L4S data packet. In such an example scenario, based on the received MA.UNITDATA.request service primitive, the ECN classifier 110 may determine that the second best effort data packet is a non-L4S data packet. In many additional embodiments, the L4S best effort data packets may include an ECN indicator in corresponding headers. The higher protocol layers may be configured to parse the best effort data packets and determine the best effort data packets to be L4S data packets upon detecting the ECN indicator in one or more headers of the best effort data packets. The ECN classifier 110 can be further configured to store the L4S best effort data packets in the L4S queue 116A and the non-L4S best effort data packets in the non-L4S/classic queue 116B. The access point 104 may determine a count of the L4S best effort data packets in the L4S queue 116A. The access point 104 can determine a second threshold count associated with the L4S queue 116A. The access point 104 may determine the second threshold count, for example, based on the priority of the best effort data packets, QoS parameters of the best effort data packets, etc. The access point 104 can modify the second threshold count, for example, based on network conditions, network demand, QoS requirements, etc. The access point 104 can thereafter compare the count of the L4S best effort data packets in the L4S queue 116A with the second threshold count. The access point 104 may determine a congestion in the L4S queue 116A if the count of the L4S best effort data packets in the L4S queue 116A exceeds the second threshold count. By way of a non-limiting example, FIG. 1 illustrates two (2) L4S best effort data packets experiencing congestion in the L4S queue 116A.

In still yet further embodiments, upon detecting the congestion in the L4S queue 114A and/or the L4S queue 116A, the access point 104 can generate an L4S congestion indication signal. The L4S congestion indication signal may identify one or more video L4S data packets and/or one or more best effort L4S data packets to be marked with a congestion indicator. In still yet additional embodiments, upon detecting the congestion in the L4S queue 114A and/or the L4S queue 116A, the access point 104 may generate an MPDU including a value indicative of the congestion. In view of the above examples, the access point 104 may generate an MPDU including a CE value of 3+2, indicating that 3 video L4S data packets and 2 best effort L4S data packets need to be CE marked, that is, marked with the congestion indicator. The transmitter 124 may transmit the L4S congestion indication signal and/or the MPDU to one or more wireless devices, for example, the wireless device 126 via a receiver 128 as illustrated in FIG. 1. Upon receiving the L4S congestion indication signal and/or the MPDU, the wireless device 126 can identify the video L4S data packets and/or the best effort L4S data packets indicated by the L4S congestion indication signal and/or the MPDU. The wireless device 126 may mark the identified video L4S data packets and/or the best effort L4S data packets with the congestion indicator, for example, the ECN indicator indicative of the CE value. That is, after receiving the identified video L4S data packets and/or the best effort L4S data packets, the wireless device 126 may update the IP headers of the identified video L4S data packets and/or the best effort L4S data packets with the CE mark. New data packets that arrive after congestion is detected have their CE (ECN=11) marked. When the congestion eases, the data packets are not marked anymore.

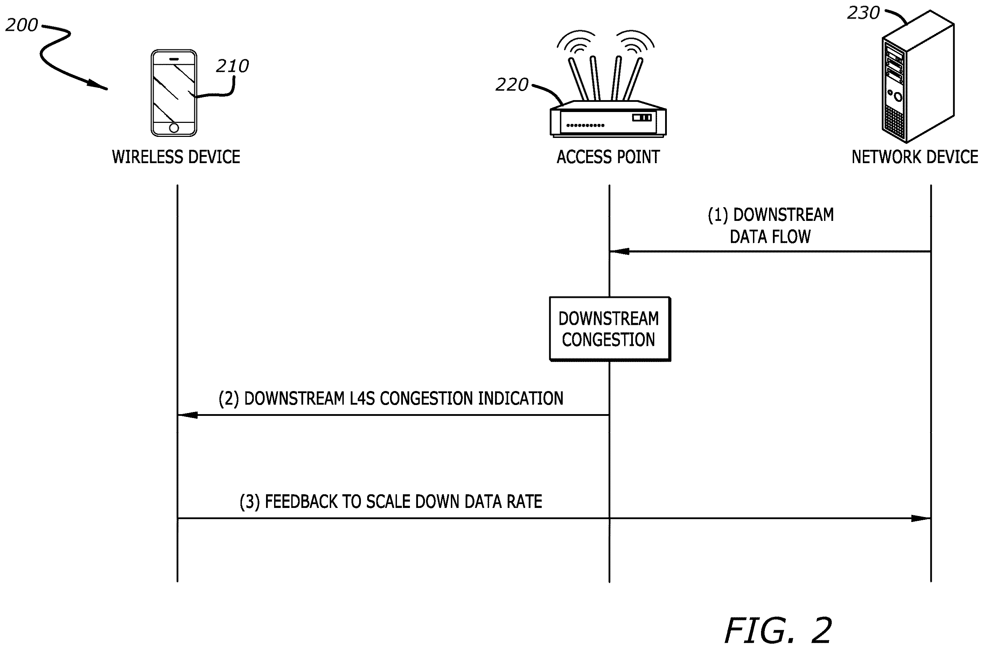

Although a specific embodiment for a wireless communication network 100 illustrating classification of L4S data packets into queues and notification of congestion in the queues suitable for carrying out the various steps, processes, methods, and operations described herein is discussed with respect to FIG. 1, any of a variety of systems and/or processes may be utilized in accordance with embodiments of the disclosure. For example, the wireless device 126 may dynamically detect congestion and transmit the L4S congestion indication signal to source and/or destination devices. The elements depicted in FIG. 1 may also be interchangeable with other elements of FIGS. 2 - 13 as required to realize a particularly desired embodiment.

Referring to FIG. 2, a schematic diagram of a wireless communication network 200 illustrating forward signaling of congestion in an L4S data flow in accordance with various embodiments of the disclosure is shown. In many embodiments, the wireless communication network 200 may be a Wireless Local Area Network (WLAN), for example, a Wi-Fi^{®} network. In a number of embodiments, the wireless communication network 200 can include a wireless device 210, an access point 220, and a network device 230. For the sake of brevity and in a non-limiting example, the wireless communication network 200 is shown in FIG. 2 to include only one wireless device 210, one access point 220, and one network device 230. However, in an actual implementation, the wireless communication network 200 can include any number of wireless devices, access points, and network devices spread across different locations for facilitating front signaling of downstream congestion and upstream congestion.

By way of a non-limiting example, the embodiments illustrated in FIG. 2 are described in the context of forward signaling of congestion in a downstream L4S data flow. The downstream data flow may refer to a transmission of data flowing downstream from the network device 230 towards the wireless device 210, for example, when the wireless device 210 receives data such as while downloading a file, streaming a video, or receiving data updates from a remote server, or the like. In a variety of embodiments, at step (1), the access point 220 can receive the downstream data flow from the network device 230. The downstream data flow can include a plurality of downstream data packets. In various embodiments, the access point 220 may identify one or more downstream L4S data packets from the plurality of downstream data packets. The access point 220 may store the downstream L4S data packet(s) in a queue. The downstream data flow may encounter, for example, network bottlenecks, router or switch queue overflows, buffer bloats, or bandwidth overloads, leading to congestion which may cause the data packets to either be delayed, queued for too long, or dropped altogether, resulting in reduced throughput. The congestion may occur when more data is transmitted through the wireless communication network 200 than the wireless communication network 200 can handle efficiently. For example, if the amount of data transmitted by the network device 230 exceeds the available bandwidth, that is, the maximum rate at which the data can be transferred over the wireless communication network 200, or if there is heavy traffic in a network path, congestion may occur and the queue may overflow.

The access point 220 may detect a congestion based on the queue. In more embodiments, the access point 220 may monitor a status of the queue. The access point 220 may monitor a count of the downstream L4S data packets in the queue. The access point 220 can determine a threshold count associated with the queue. The access point 220 may compare the count of the downstream L4S data packets in the queue with a threshold count. The access point 220 can detect the congestion when the count of the downstream L4S data packets in the queue exceeds the threshold count. At step (2), the access point 220 may then transmit an indication of the detected congestion to the wireless device 210 that is a destination of the downstream L4S data packets. The indication of the detected congestion in the queue that stores the downstream L4S data packets may be referred to as "downstream L4S congestion indication". In additional embodiments, if the access point 220 experiences a downstream congestion in the queue that stores the downstream L4S data packets, herein referred to as "downstream L4S congestion", the access point 220 may signal the downstream L4S congestion in a forward direction by transmitting the downstream L4S congestion indication in one or more downstream L4S data packets of the downstream data flow. In further embodiments, the access point 220 can transmit a downstream L4S congestion indication signal to the wireless device 210. In still more embodiments, the downstream L4S congestion indication signal can include an MPDU with a congestion indication control field. In still further embodiments, the MPDU may direct the wireless device 210 to mark at least one downstream L4S data packet with a congestion indicator. The congestion indicator may be, for example, an L4S CE mark =1, indicating that the STA 416 should CE mark the downstream L4S data packet(s) with ECN = 11. The downstream L4S congestion indication signal may be indicative of the congestion associated with the downstream data flow. At step (3), the wireless device 210 may transmit a feedback signal to the network device 230. The feedback signal may signal to the network device 230 to scale down a data rate or a rate of transmitting data to the wireless device 210. The network device 230 may then adjust a data transmission rate, for example, reduce the data transmission rate, in response to the indicated downstream L4S congestion, to reduce the downstream L4S congestion. The devices and methods discussed herein allow the network device 230 to quickly respond to the downstream L4S congestion by allowing transmission of a faster downstream congestion notification to the network device 230. In still additional embodiments, the devices and methods discussed herein can also facilitate forward signaling of congestion in an upstream data flow.

In several embodiments, the L4S congestion indication signals including the downstream L4S congestion indication signal, and/or the MPDU, may indicate a value indicative of the congestion in the downstream, a count of data packets in the queue that are experiencing the congestion, a number of data packets that should be ECN marked, a percentage of data packets in the queue that are experiencing the congestion, or a probability of congestion being experienced for the data packets in the queue. In several more embodiments, the L4S congestion indication signals and/or the MPDU can also identify the data flow or the network traffic, associated with the data packets that should be ECN marked. In numerous embodiments, the data flow can be identified by utilizing one or more fields in the MAC header, or by way of one or more traffic identifier values associated with the data flow. The L4S congestion indication signals and/or the MPDU may also identify a device at which the congestion is experienced. The L4S congestion indication signals and/or the MPDU can be transmitted, for example, by way of a management frame or a control frame associated with one or more Wi-Fi protocols. In numerous additional embodiments, the L4S congestion indication signals and/or the MPDU may be transmitted by way of an 802.11 Information Element (IE) in an 802.11 frame associated with the Wi-Fi protocol(s). In further additional embodiments, the L4S congestion indication signals and/or the MPDU can be transmitted by way of a layer 2 message, such as, but not limited to, an 802.11 frame. In many embodiments, the L4S congestion indication signals and/or the MPDU can be transmitted before serving, that is, scheduling for transmission and/or transmitting the data packets that are affected by the congestion. The L4S congestion indication signals and/or the MPDU can be transmitted in both upstream and downstream data flows. In a number of embodiments, the L4S congestion indication signals and/or the MPDU can be generated and transmitted by one or more of a source device, a destination device, or any intermediate device between the source device and the destination device, thereby reducing a round-trip time associated with the congestion notification. In a variety of embodiments, the L4S congestion indication signals and/or the MPDU can be transmitted before transmitting the data flow to the destination device. The L4S congestion indication signals and/or the MPDU, therefore, can be transmitted proactively to enable the source device and/or the destination device to anticipate the congestion, thereby facilitating proactive congestion management.

Although a specific embodiment for a wireless communication network 200 illustrating forward signaling of congestion in an L4S data flow suitable for carrying out the various steps, processes, methods, and operations described herein is discussed with respect to FIG. 2, any of a variety of systems and/or processes may be utilized in accordance with embodiments of the disclosure. For example, the access point 220 may transmit the L4S congestion indication signals and/or insert a congestion indicator in the L4S data packets of both upstream and downstream data flows. The elements depicted in FIG. 2 may also be interchangeable with other elements of FIG. 1 and FIGS. 3 - 13 as required to realize a particularly desired embodiment.

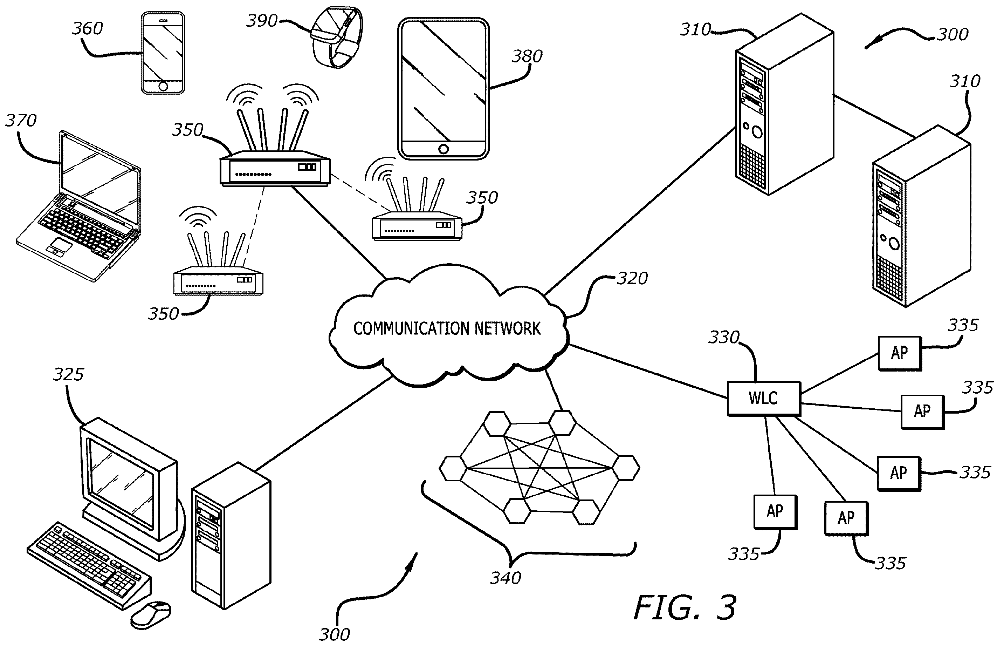

Referring to FIG. 3, a conceptual network diagram 300 of various environments in which a congestion notifier may operate on a plurality of network devices in accordance with various embodiments of the disclosure is shown. The congestion notifier may implement or may be configured to execute a congestion notification logic for managing congestion notifications for L4S data flows. Those skilled in the art will recognize that the congestion notifier can be comprised of various hardware and/or software deployments and can be configured in a variety of ways. In many embodiments, the congestion notifier can be configured as a standalone device, exist as a logic in another network device, be distributed among various network devices operating in tandem, or remotely operated as part of a cloud-based network management tool. In a number of embodiments, one or more servers 310 can be configured with the congestion notifier or can otherwise operate as the congestion notifier. In a variety of embodiments, the congestion notifier may operate on one or more servers 310 connected to a communication network 320. The communication network 320 can include wired networks or wireless networks. In various embodiments, the communication network 320 may be a Wi-Fi network operating on various frequency bands, such as, 2.4 GHz, 5GHz, or 6 GHz. In more embodiments, the congestion notifier operating on the servers 310 can facilitate the detection and notification of congestion in L4S data flows. In additional embodiments, the congestion notifier can be provided as a cloud-based service that can service remote networks, such as, but not limited to, a deployed network 340. In further embodiments, the congestion notifier can be a logic that detects the congestion in the L4S data flows and generates the L4S congestion indication signals indicative of the congestion in the L4S data flows.

Further, in still more embodiments, the congestion notifier may be operated as a distributed logic across multiple network devices. In the embodiment illustrated in FIG. 3, a plurality of access points 350 can operate as the congestion notifier in a distributed manner or may have one specific device operate as the congestion notifier for all the neighboring or sibling access points 350. The access points 350 facilitate Wi-Fi connections for various electronic devices, for example, mobile computing devices such as, but not limited to, laptop computers 370, cellular phones 360, portable tablet computers 380, and wearable computing devices 390.

In still further embodiments, the congestion notifier may be integrated within another network device. In the embodiment illustrated in FIG. 3, a Wireless LAN Controller (WLC) 330 may have an integrated congestion notifier that the WLC 330 can utilize to detect the congestion in the L4S data flows and generate the L4S congestion indication signals indicative of the congestion in the L4S data flows. The WLC 330 may also monitor or control power consumption of a plurality of access points 335 to which the WLC 330 is connected. In still additional embodiments, a personal computer 325 may be utilized to access and/or manage various aspects of the congestion notifier, either remotely or within the network itself. In the embodiment illustrated in FIG. 3, the personal computer 325 may communicate over the communication network 320 and can access the congestion notifier of the servers 310, or the network access points 350, or the WLC 330.

Although a specific embodiment for various environments that the congestion notifier may operate on a plurality of network devices suitable for carrying out the various steps, processes, methods, and operations described herein is discussed with respect to FIG. 3, any of a variety of systems and/or processes may be utilized in accordance with embodiments of the disclosure. In many non-limiting examples, the congestion notifier may be provided as a device or software separate from the network devices or the congestion notifier may be integrated into the network devices. The elements depicted in FIG. 3 may also be interchangeable with other elements of FIGS. 1 - 2 and 4 - 13 as required to realize a particularly desired embodiment.

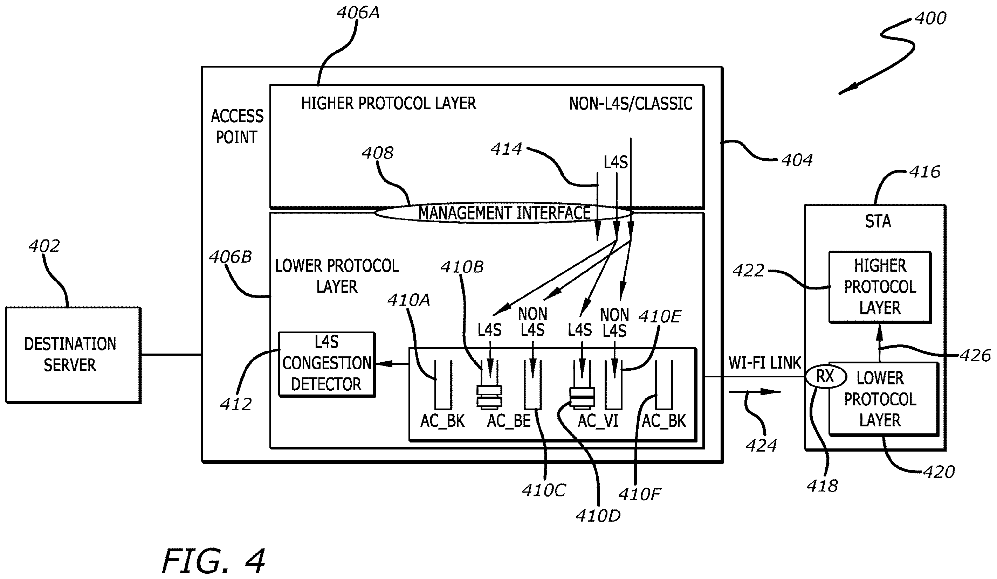

Referring to FIG. 4, a block diagram of a system 400 illustrating a forward signaling of downstream congestion detected in L4S queues implemented in a lower protocol layer in accordance with various embodiments of the disclosure is shown. For purposes of illustration, the description of FIG. 4 refers to forward signaling of downstream congestion detected in L4S queues that store downstream L4S data packets identified from a downstream data flow; however, the scope of the devices and methods discussed herein is not limited to forward signaling of downstream congestion, but may extend to include forward signaling of upstream congestion detected in L4S queues that store upstream L4S data packets identified from an upstream data flow. The upstream congestion experienced in the queue that stores the upstream L4S data packets is herein referred to as "upstream L4S congestion". The downstream congestion experienced in the queue that stores the downstream L4S data packets is herein referred to as "downstream L4S congestion".

Consider an example where a wireless device such as a client device or a station, herein referred to as a "STA 416", connects to an access point 404 wirelessly using a Wi-Fi^{®} protocol, which may allow the STA 416 to communicate with other devices in a wireless communication network. The access point 404 may be connected to a local network, which in turn, may be connected to the internet or a network device. In some embodiments, the network device can be a server. In some more embodiments, the network device can be an intermediate network node (for example, another access point, a switch, a router, etc.) connecting the access point 404 to the server. In a non-limiting example, the access point 404 is shown to be connected to a destination server 402 in FIG. 4. The destination server 402 may refer to a remote server that can host, for example, services, websites, files, or data. The destination server 402 may, for example, be a web server, an application server, a file server, or any other type of server that provides resources. The destination server 402 may transmit network traffic, for example, L4S traffic, in a downstream direction towards the STA 416 via the access point 404. A receiver 418 of the STA 416 may receive the L4S traffic from the destination server 402 via the access point 404.

In the embodiments illustrated in FIG. 4, the access point 404 may implement a higher protocol layer 406A and a lower protocol layer 406B of a network stack defined by an Open Systems Interconnection (OSI) model. The higher protocol layer 406A may be above the lower protocol layer 406B. In many embodiments, the lower protocol layer 406B may refer to a data link layer or layer 2 including a Media Access Control (MAC) sublayer. The MAC sublayer may execute core functions including, for example, channel access, retransmissions, packet fragmentation, and encryption. The MAC sublayer may control access to a shared communication medium in the wireless communication network, ensuring that various network devices can transmit data effectively and fairly over a common communication network such as a Wi-Fi^{®} network. The MAC sublayer may define a hardware or data link address referred to as a MAC address. This MAC address may be unique to each network device. The MAC sublayer may utilize MAC addresses to identify network devices, for example, the STA 416 and the destination server 402, in the wireless communication network. The MAC sublayer may also control how the STA 416 or the destination server 402 accesses and transmits data. The MAC sublayer may be configured to encapsulate data into frames that are transmitted over a wireless communication medium. These frames contain the MAC addresses of both a transmitter device and a receiver device. For the network traffic coming from the destination server 402 and flowing in a downstream direction, herein referred to as a "downstream data flow", towards the STA 416, the destination server 402 may be a source device with the access point 404 as the transmitter device and the STA 416 may be the receiver device. For the network traffic coming from the STA 416 and flowing in an upstream direction, herein referred to as an "upstream data flow", towards the destination server 402, the STA 416 may be a source device with the access point as the transmitter device and the destination server 402 may be the receiver device. In other words, the lower protocol layer 406B may be configured to perform one or more layer 2 operations.

In a number of embodiments, the higher protocol layer 406A may include a network layer herein referred to as "layer 3". The layer 3 may utilize Internet Protocol (IP) addresses to uniquely identify the source device and the destination device and determine an optimal path for data to travel between the source device and the destination device. In a variety of embodiments, the higher protocol layer 406A may include a transport layer herein referred to as "layer 4". The layer 4 may manage network traffic between the source device and the destination device to ensure complete data transfers. The layer 4 may utilize transport layer protocols, for example, Transmission Control Protocol (TCP), User Datagram Protocol (UDP), Datagram Congestion Control Protocol (DCCP), Stream Control Transmission Protocol (SCTP), or the like to control the volume of data, the destination for transmitting the data, and a rate of transmitting the data. The access point 404 may receive data from the higher protocol layer 406A such as the layer 3 or the layer 4, and encapsulate the data into frames, each with a source address and a destination address, in the lower protocol layer 406B. When the access point 404 receives frames from the STA 416, the lower protocol layer 406B may decapsulate the frames to extract a payload and forward the data to the higher protocol layer 406A for processing.

The higher protocol layer 406A may be operably coupled to the lower protocol layer 406B via a management interface 408. The management interface 408 may refer to a structured communication entity that allows exchange of data between the higher protocol layer 406A and the lower protocol layer 406B. The management interface 408 may invoke layer management functions, for example, handing off data packets correctly between the higher protocol layer 406A and the lower protocol layer 406B. In various embodiments, the management interface 408 may be a MAC-SAP. In more embodiments, the management interface 408 may be an MLME. The MLME may handle higher MAC functions including, for example, synchronization, power management, and connection management, which include association and authentication. The MLME may manage channel access rules and algorithms, ensuring that the network devices can appropriately gain access to the shared communication medium. The MLME may also manage beacon frames in the wireless communication network and control whether the network devices utilize Carrier Sense Multiple Access (CSMA)/Collision Avoidance (CA), CSMA/Collision Detection (CD), or other access mechanisms. The MLME may communicate with the lower protocol layer 406B, for example, the MAC sublayer, and handle higher-level management functions and decisions that influence the operation of the MAC sublayer. The MLME may also communicate with the higher protocol layer 406A to inform the higher protocol layer 406A about the state of the wireless communication network, any security procedures, or changes in a network topology. In additional embodiments, the higher protocol layer 406A and the lower protocol layer 406B may communicate with each other by exchanging service primitives through the management interface 408.

The access point 404 may receive the downstream data flow including a plurality of downstream data packets from the destination server 402, through the higher protocol layer 406A. These downstream data packets need to be classified and distinguished into L4S data packets and non-L4S/classic congestion control data packets to determine whether the data packets should be stored in L4S queues 410B and 410D or non-L4S/classic queues 410C and 410E in the lower protocol layer 406B. In further embodiments, the L4S queues 410B and 410D in the lower protocol layer 406B may be low latency queues configured to store L4S data packets. In still more embodiments, the non-L4S queues 410C and 410E may be classic queues configured to store non-L4S data packets. In still further embodiments, the access point 404 may execute a queuing mechanism that prioritizes transmission of the L4S data packets in the L4S queues 410B and 410D over the non-L4S data packets in the non-L4S queues 410C and 410E.

The lower protocol layer 406B may receive the downstream data packets from the higher protocol layer 406A via the management interface 408. The downstream data packets may undergo downstream queuing in the lower protocol layer 406B, where the downstream data packets are stored in multiple queues, for example, the queues 410A, 410B, 410C, 410D, 410E, and 410F as illustrated in FIG. 4. The queues 410A, 410B, 410C, 410D, 410E, and 410F are herein collectively referred to as "the queues 410A - 410F". In still additional embodiments, the queues 410A - 410F may be defined by Access Categories (ACs), with each access category being associated with a respective priority level. The access categories may include, for example, a background (BK) access category, a Best Effort (BE) access category, a video (VI) access category, and a voice (VO) access category, denoted as AC_BK, AC_BE, AC_VI, and AC_VO, respectively. In some more embodiments, the access categories may be in order of priority, from highest to lowest priority, for example: AC_VO, AC_VI, AC_BE, and AC_BK. In yet various embodiments, the lower protocol layer 406B may implement dual queues for storing L4S data packets and non-L4S/classic data packets (for VI and BE). The lower protocol layer 406B can implement L4 and non-L4S queues for other traffic classes (or access categories) such as the L4S voice (VO) data packets. The L4S queues 410B and 410D may buffer one or more downstream L4S data packets of the downstream data flow. By way of a non-limiting example, in yet more embodiments, the queuing mechanism may queue some L4S data packets and non-L4S data packets from the downstream data flow in the queues 410B and 410C, respectively, defined as AC_BE queues, and some L4S data packets and non-L4S data packets in the queues 410D and 410E, respectively, defined as AC_VI queues, as illustrated in FIG. 4. The L4S data packets in the queues 410B and 410D may experience downstream congestion, for example, if the destination server 402 transmits the L4S data packets at a higher speed than the access point 404 can process and deliver to the STA 416.

In still yet more embodiments, the access point 404 may further include an L4S congestion detector 412 implemented in the lower protocol layer 406B. In many further embodiments, the L4S congestion detector 412 may be configured to detect downstream L4S congestion in the lower protocol layer 406B. In many additional embodiments, the L4S congestion detector 412 may be configured to inspect each of the L4S queues, for example, the L4S queues 410B and 410D defined by AC_BE and AC_VI, respectively, in the lower protocol layer 406B, and detect the downstream L4S congestion. In still yet further embodiments, the L4S congestion detector 412 may detect the downstream L4S congestion based on queue depth. For example, the L4S congestion detector 412 may continuously inspect the queue depth and detect the downstream L4S congestion if the queue depth is greater than or equal to a threshold count of data packets in the queue 410B or 410D. In still yet additional embodiments, the L4S congestion detector 412 may configure the threshold count to maximize throughput. In several embodiments, the L4S congestion detector 412 may employ minimum and maximum queue depth thresholds to detect the downstream L4S congestion. In several more embodiments, the L4S congestion detector 412 may detect the downstream L4S congestion based on other additional parameters including, for example, L4S marking probability, classic queue drop probability, Received Signal Strength Indicator (RSSI) of the STA 416, etc.

The embodiments illustrated in FIG. 4 are described in the context of forward signaling the downstream L4S congestion by signaling through the lower protocol layer 406B, for example, layer 2 or the MAC sublayer. Signaling of the downstream L4S congestion through the layer 2 or the MAC sublayer is herein referred to as "layer 2 signaling". Consider an example where network traffic from the destination server 402 flows in the downstream direction towards the STA 416. The access point 404 may receive this downstream data flow including a plurality of downstream data packets from the destination server 402. The access point 404 may receive the downstream data flow at the higher protocol layer 406A, for example, layer 3, layer 4, or the like. In numerous embodiments, the downstream data flow may be indicative of a source address, for example, a source IP address, associated with the destination server 402, and a destination address, for example, a destination IP address, associated with the STA 416.

The access point 404 may need to identify one or more downstream L4S data packets from the plurality of downstream data packets in the downstream data flow. As the lower protocol layer 406B (interchangeably referred to as the "MAC sublayer") typically does not inspect higher protocol layer headers, for example, layer 3 headers, the access point 404 implements a southbound, service primitive signaling 414 to signal to the lower protocol layer 406B which downstream data packets are L4S packets. This service primitive signaling 414 may allow the lower protocol layer 406B to identify the downstream L4S packets without requiring the lower protocol layer 406B to process ECN-Capable Transport (ECT) bits in the IP headers of the downstream data packets at the lower protocol layer 406B. The service primitive signaling 414 may preclude the need for the lower protocol layer 406B to inspect the ECT bits to classify the downstream data packets as downstream L4S data packets and downstream non-L4S data packets for transmission to appropriate queues. In numerous additional embodiments, the access point 404 may generate a service primitive signaling 414 named, for example, "MA-UNITDATA.request", at the management interface 408 such as the MAC-SAP, to signal which downstream data packets among the received downstream data packets are downstream L4S data packets to the lower protocol layer 406B. In further additional embodiments, the access point 404 may add an L4S parameter to the "MA-UNITDATA.request" service primitive signaling 414 to indicate the downstream L4S data packets from among the plurality of downstream data packets received in the downstream data flow. In a non-limiting example, the access point 404 may generate the "MA-UNITDATA.request" service primitive signaling 414 in the following format:

```
 MA-UNITDATA.request(
         source address,
         destination address,
         routing information,
         data,
         priority,
          ...
         MSDU format,
         SCSID,
         L4S
         )
         
```

where,
"source address" denotes a MAC address of the entity transmitting the data packet, "destination address" denotes a MAC address of the STA 416,
"data" denotes the payload of the data packet,
"priority" denotes a User Priority (UP) or a Traffic Identifier (TID) value,
"MSDU" denotes a MAC Service Data Unit,
"SCSID" denotes a Stream Classification Service Identifier for the SCS stream to which the data packet belongs, and
"L4S" parameter denotes the L4S parameter configured to identify a downstream data packet as an L4S packet.

In further embodiments, the MA-UNITDATA.request service primitive signaling 414 can indicate an "ECN" parameter to provide the ECN bits from the IP header of the downstream data packet, instead of the L4S parameter. The lower protocol layer 406B may use the ECN parameter to determine whether the downstream data packet is an L4S packet. For example, if the ECT(1) bit in the MA-UNITDATA.request service primitive signaling 414 is set, it may imply that ECN bits for corresponding downstream data packet are either 01 or 11 and the corresponding downstream data packet is an L4S data packet.

The MSDU may refer to a data unit that the lower protocol layer 406B receives from the higher protocol layer 406A and is responsible for framing and preparing the downstream data packets for transmission over a network. The MSDU may refer to the actual payload that can be transferred over the network. In many embodiments, the MSDU may be encapsulated within an MPDU, which may add header information (such as MAC addresses and control information) needed for proper communication over the network. The MSDU may be encapsulated within a MAC header to create the MPDU, which is then transmitted over a physical medium. The MPDU may be the actual frame sent over the network. Further, the SCSID may refer to an identifier that uniquely identifies a data flow, which can then be classified based on a required service level (e.g., low latency, high bandwidth, high reliability, or high priority) and other specific characteristics or parameters such as application type, source, destination, or the like. Stream classification may assign different types of network traffic to different service levels, ensuring that critical or time-sensitive data (e.g., voice or video) is prioritized over less critical data (e.g., file downloads or email).

Based on the "MA-UNITDATA.request" service primitive signaling 414 received from the management interface 408, the downstream L4S data packets and the downstream non-L4S data packets of the downstream data flow are stored in the L4S queues 410B and 410D and the non-L4S queues 410C and 410E, respectively, in the lower protocol layer 406B. In an embodiment, one or more ECN classifiers in the higher protocol layer 406A may be employed for classifying the downstream L4S data packets and the downstream non-L4S data packets for storage in the L4S queues 410B and 410D and the non-L4S queues 410C and 410E, respectively, in the lower protocol layer 406B based on ECN marking and priority for the downstream data packet(s). In one embodiment, the "priority" parameter received in the MA-UNITDATA.request service primitive signaling 414 may be used to map a data packet to Video or Best Effort queues and the L4S parameter may be used to map the data packet to the L4S or non-L4S queues. For example, a first ECN classifier may classify video data packets indicating that the video data packets are L4S data packets and indicate that in the "MA-UNITDATA.request" service primitive signaling 414 to the lower protocol layer 406B, based on which the L4S video data packets are stored in the queue 410D in the lower protocol layer 406B. Similarly, a second ECN classifier may classify best effort data packets indicating that the best effort data packets are L4S data packets and indicate that in the "MA-UNITDATA.request" service primitive signaling 414 to the lower protocol layer 406B, based on which the L4S best effort data packets are stored in the queue 410B in the lower protocol layer 406B. In a number of embodiments, the lower protocol layer 406B may queue the L4S data packets in their respective L4S queues, for example, 410B and 410D, corresponding to the priority (e.g., User Priority or TID value) indicated in the "MA-UNITDATA.request" service primitive signaling 414. For example, the lower protocol layer 406B may queue an L4S indicated data packet for priority value corresponding to best effort in the L4S AC_BE queue 410B, and queue an L4S indicated data packet for priority value corresponding to video in the L4S AC_VI queue 410D.

The lower protocol layer 406B may experience downstream congestion in any of the L4S queues, for example, the L4S AC_BE queue 410B and/or the L4S AC_VI queue 410D. In a variety of embodiments, the L4S congestion detector 412 in the lower protocol layer 406B may detect a downstream congestion in the L4S queues 410B and 410D as follows. The L4S congestion detector 412 may determine a count of the downstream L4S data packets in each of the L4S queues 410B and 410D and compare the count of the downstream L4S data packets with a threshold count corresponding to the L4S queue 410B or 410D. The L4S congestion detector 412 may detect the congestion based on the count of the downstream L4S data packets in each of the L4S queues 410B and 410D exceeding the corresponding threshold count. In various embodiments, the count of the downstream L4S data packets that are experiencing the congestion corresponds to a difference between the count of the downstream L4S data packets in each of the L4S queues 410B and 410D and the corresponding threshold count. In more embodiments, the L4S congestion detector 412 may determine a percentage of the downstream L4S data packets in each of the L4S queues 410B and 410D that are experiencing the congestion. In another embodiment, the L4S congestion detector 412 may determine a probability of congestion being experienced for the downstream L4S data packets in each of the L4S queues 410B and 410D.

In more embodiments, the access point 404 may transmit an indication 424 of the detected congestion to the STA 416 that is a destination of the downstream L4S data packets. To transmit the indication 424 of the detected congestion to the STA 416, in additional embodiments, the access point 404 may generate an MPDU including a value indicative of the congestion associated with the downstream data flow identified by one of a TID, SCSID, or an access category, and transmit the MPDU to the STA 416. In further embodiments, the MPDU may be configured to provide the indication 424 by including one or more of a value indicative of the congestion in the downstream, a count of the downstream L4S data packets in the L4S queue 410B or 410D that are experiencing the congestion, a percentage of the downstream L4S data packets in the L4S queue 410B or 410D that are experiencing the congestion, or a probability of congestion being experienced for the downstream L4S data packets in the L4S queue 410B or 410D.

In still more embodiments, the MPDU may be a management frame, a control frame, or a data frame. Since the downstream L4S data packets which experienced the congestion in any of the L4S queues, for example, the L4S AC_BE queue 410B or the L4S AC_VI queue 410D, are queued and encrypted already, these downstream L4S data packets cannot be marked for CE (ECN=11) in their IP headers at the lower protocol layer 406B. Marking at the lower protocol layer 406B may be a layering violation and may require these downstream L4S data packets to be dequeued, decrypted, and then marked. For faster congestion signaling, in still further embodiments, the access point 404 may mark the MPDUs that are already queued, at the lower protocol layer 406B, for example, a MAC sublayer, an 802.11 MAC layer, of the access point 404 to transmit a congestion indication faster to the STA 416, which then transmits congestion indication feedback to the destination server 402 that generated the downstream L4S data packets, so that the data rate can be scaled back sooner to avoid any packet drops. In still additional embodiments, the access point 404 may transmit the downstream L4S data packets to the STA 416 after transmitting the indication 424 of the detected congestion. In these embodiments, after the MPDU is received by the STA 416, the congestion indication in the MPDU directs the STA 416 to mark at least one downstream L4S data packet with a congestion indication, for example, at an IP layer by marking ECN bits in an IP header for congestion indication.

In some more embodiments, to transmit the indication 424 of the detected congestion, the access point 404 may update an MPDU) of at least one downstream L4S data packet in the L4S queue 410B or 410D, with a congestion indication control field, and transmit the downstream L4S data packet(s) to the STA 416. In further embodiments, this downstream L4S data packet whose MPDU is updated with the congestion indication control field may be a downstream L4S data packet, in the L4S queue 410B or 410D, experiencing congestion. In yet various embodiments, this downstream L4S data packet(s) whose MPDU is updated with the congestion indication control field itself may not be experiencing congestion and may be ahead of another downstream L4S data packet that experiences the congestion. In yet more embodiments, the congestion indication control field may be indicative of one or more of a count of the downstream L4S data packets in the L4S queue 410B or 410D that are experiencing the congestion, a percentage of the downstream L4S data packets in the L4S queue 410B or 410D that are experiencing the congestion, a probability of congestion being experienced for the downstream L4S data packets in the L4S queue 410B or 410D. In one or more embodiments, the congestion indication control field may be included in a MAC header or a layer 2 header of the MPDU. The congestion indication control field may include, for example, an Aggregated-control (A-control) subfield of a High Efficiency (HE) variant High Throughput (HT) defined to carry layer 2 signaling of the L4S congestion. In still yet more embodiments, when the downstream congestion is experienced in the L4S queue 410B or 410D at the lower protocol layer 406B, the access point 404 may perform layer 2 signaling, for example, using A-control signaling, to provide a faster congestion notification. A-control signaling may refer to congestion signaling executed, for example, through the A-control subfield of the HE variant HT control field defined in a header of a data packet, a QoS null frame, a management frame, or a control frame. In still further embodiments, if A-control signaling is executed through an A-control subfield of an HE variant HT control field defined in a header of a management frame, the indication of the detected congestion is carried in a frame body of the management frame. The frame body may refer to that section of the management frame which includes management information.

In many further embodiments, the access point 404 may signal the downstream L4S packets that experienced congestion in the L4S queue 410B or 410D at the lower protocol layer 406B for L4S congestion, for example, using the A-control subfield in MAC headers of those downstream L4S packets, via the MPDUs. When the STA 416 receives such a downstream L4S packet, the STA 416 may perform CE marking (ECN=11) in an IP header of the downstream L4S packet before the downstream L4S packet is delivered to a higher protocol layer 422, for example, layer 3, of the STA 416, or in many additional embodiments, may request the higher protocol layer 422 to perform the CE marking. The marking of ECN = 11 may denote L4S CE, which may signal the downstream L4S congestion without causing significant delays. In still yet further embodiments, the downstream L4S packets that are ahead in the L4S queue 410B or 410D and soon to be transmitted can signal the downstream L4S congestion, for example, using A-control signaling. For example, if three (3) downstream L4S packets have experienced downstream L4S congestion, the three packets that are ahead in the transmit queue may get their layer 2 header updated to signal, in the A-control subfield, that these downstream L4S packets should be CE marked at the STA 416. In still yet additional embodiments, the A-control signaling in one of the downstream L4S packets may indicate the count of the packets of the same downstream data flow (or TID or SCSID) that should be CE marked. For example, if three downstream L4S packets need to be CE marked, the A-control sub-field may indicate in one of the downstream L4S packets that three downstream L4S packets should be CE marked at the STA 416.

In several embodiments, the receiver 418 of the STA 416 may receive the indication 424 of the downstream L4S congestion in the L4S queue 410B or 410D of the access point 404, through a lower protocol layer 420. The STA 416 may receive at least one downstream L4S data packet of the downstream L4S data packets buffered in the L4S queue 410B or 410D. In several more embodiments, the higher protocol layer 422, for example, layer 3, may be above the lower protocol layer 420. In numerous embodiments, the lower protocol layer 420 may be configured to perform functions similar to the lower protocol layer 406B of the access point 404. The lower protocol layer 420 may handle communication between the STA 416 and the access point 404. The higher protocol layer 422 may perform higher-level functions and web application services including, for example, web browsing, transferring files, messaging, etc.

The STA 416 may receive the indication 424 of the downstream L4S congestion and the downstream L4S data packet(s) at the lower protocol layer 420 via the receiver 418. The STA 416 may mark the downstream L4S data packet(s) with a congestion indicator based on the indication 424 of the downstream L4S congestion. In numerous additional embodiments, the indication of the congestion may be received through the congestion indication control field in the MPDU corresponding to the downstream L4S data packet(s). For example, the congestion indicator may be an L4S CE mark =1 in the A-control sub-field, indicating that the STA 416 should CE mark the downstream L4S data packet(s) with ECN = 11. In further additional embodiments, the congestion indication control field may be indicative of a packet count for marking with the congestion indicator. In many embodiments, the STA 416 may mark the downstream L4S data packet(s) with the congestion indicator further based on the packet count.

In a variety of embodiments, the STA 416 may transmit a request to the higher protocol layer 422 to perform the marking. When the STA 416 receives the layer 2 signaling for CE marking the downstream L4S data packet(s) in the IP header, in various embodiments, the STA 416 may request the higher protocol layer 422 to add that marking to the downstream L4S data packet(s). These embodiments assume that the lower protocol layer 420 is not performing the CE marking itself, since CE marking is a layer 3 operation. In more embodiments, the STA 416 may generate, for example, a "MA-UNITDATA.indication" service primitive 426 to indicate that the corresponding downstream L4S data packet(s) must be CE marked at the higher protocol layer 422 by having the higher protocol layer 422 set ECN=11 in the IP header. In a non-limiting example, the STA 416 may generate the "MA-UNITDATA.indication" service primitive 426 in the following format:

```
 MA-UNITDATA.indication(
         source address,
         destination address,
         routing information,
         data,
         reception status,
         priority,
          ...
         MSDU format,
         L4S CE marking needed,
         Number of packets for CE marking
         )
```

where, "L4S CE marking needed" indicates that the corresponding downstream L4S data packet(s) must be CE marked, for example, by setting ECN=11 in the IP header. The "MA-UNITDATA.indication" service primitive 426 may optionally also include "Number of packets for CE marking" that indicates that the higher protocol layer 422 must CE mark that many number of packets by setting ECN=11 in the IP header.

The STA 416 may provide this "MA-UNITDATA.indication" service primitive 426 to the higher protocol layer 422. When the higher protocol layer 422 receives this "MA-UNITDATA.indication" service primitive 426, the higher protocol layer 422 may update the IP header by setting ECN=11 for that downstream L4S data packet(s). After the CE marking is completed, the STA 416 may transmit a feedback signal with the marked downstream L4S data packet(s) or congestion marked acknowledgments to the destination server 402, which may interpret the CE marking as an indication of the downstream L4S network congestion and an indication to scale down a data rate or a rate of transmitting data to the STA 416. The destination server 402 may then adjust a data transmission rate, for example, reduce the data transmission rate, in response to the indicated downstream L4S congestion, to reduce the downstream L4S congestion. The devices and methods discussed herein allow the destination server 402 to quickly respond to the downstream L4S congestion by allowing transmission of a faster downstream congestion notification to the destination server 402 from the STA 416.

Although a specific embodiment for a system 400 illustrating a forward signaling of downstream congestion detected in L4S queues implemented in a lower protocol layer suitable for carrying out the various steps, processes, methods, and operations described herein is discussed with respect to FIG. 4, any of a variety of systems and/or processes may be utilized in accordance with embodiments of the disclosure. For example, in some more embodiments, the devices and methods discussed herein may employ other different methods and congestion detection algorithms for detecting downstream congestion, for example, by utilizing Round Trip Time (RTT) measurements as secondary signals of congestion, monitoring packet losses, Active Queue Management (AQM) algorithms that provide AQM feedback, or the like. The elements depicted in FIG. 4 may also be interchangeable with other elements of FIGS. 1 - 3 and FIGS. 5 - 13 as required to realize a particularly desired embodiment.

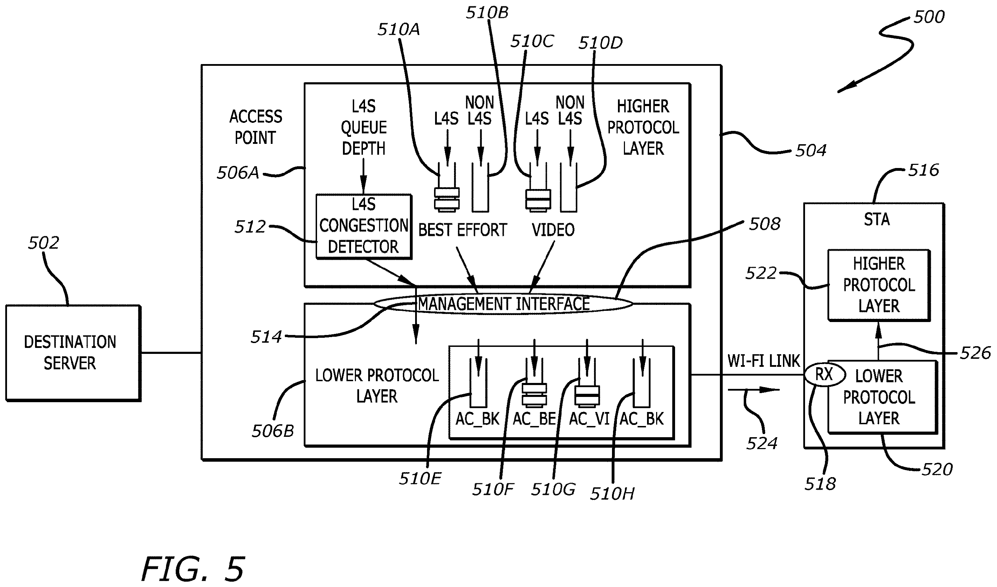

Referring to FIG. 5, a block diagram of a system 500 illustrating a forward signaling of downstream congestion detected in L4S queues implemented in a higher protocol layer in accordance with various embodiments of the disclosure is shown. For purposes of illustration, the description of FIG. 5 refers to forward signaling of downstream congestion detected in L4S queues that store downstream L4S data packets identified from a downstream data flow; however, the scope of the devices and methods discussed herein is not limited to forward signaling of downstream congestion, but may extend to include forward signaling of upstream congestion detected in L4S queues that store upstream L4S data packets identified from an upstream data flow. The upstream congestion experienced in the queue that stores the upstream L4S data packets is herein referred to as "upstream L4S congestion". The downstream congestion experienced in the queue that stores the downstream L4S data packets is herein referred to as "downstream L4S congestion".

Consider an example where a wireless device such as a client device or a station, herein referred to as a "STA 516", connects to an access point 504 wirelessly using a Wi-Fi^{®} protocol, which may allow the STA 516 to communicate with other devices in a wireless communication network. The access point 504 may be connected to a local network, which in turn, may be connected to the internet or a network device. In some embodiments, the network device can be a server. In some more embodiments, the network device can be an intermediate network node (for example, another access point, a switch, a router, etc.) connecting the access point 504 to the server. In a non-limiting example, the access point 504 is shown to be connected to a destination server 502 in FIG. 5. The destination server 502 may refer to a remote server that can host, for example, services, websites, files, or data. The destination server 502 may, for example, be a web server, an application server, a file server, or any other type of server that provides resources. The destination server 502 may transmit network traffic, for example, L4S traffic, in a downstream direction towards the STA 516 via the access point 504. A receiver (Rx) 518 of the STA 516 may receive the L4S traffic from the destination server 502 via the access point 504.

In the embodiments illustrated in FIG. 5, the access point 504 may implement a higher protocol layer 506A and a lower protocol layer 506B of a network stack defined by an Open Systems Interconnection (OSI) model. The higher protocol layer 506A may be above the lower protocol layer 506B. In many embodiments, the lower protocol layer 506B may refer to a data link layer or layer 2 including a Media Access Control (MAC) sublayer. The MAC sublayer may execute core functions including, for example, channel access, retransmissions, packet fragmentation, and encryption. The MAC sublayer may control access to a shared communication medium in the wireless communication network, ensuring that various network devices can transmit data effectively and fairly over a common communication network such as a Wi-Fi^{®} network. The MAC sublayer may define a hardware or data link address referred to as a MAC address. This MAC address may be unique to each network device. The MAC sublayer may utilize MAC addresses to identify network devices, for example, the STA 516 and the destination server 502, in the wireless communication network. The MAC sublayer may also control how the STA 516 or the destination server 502 accesses and transmits data. The MAC sublayer may be configured to encapsulate data into frames that are transmitted over a wireless communication medium. These frames contain the MAC addresses of both a transmitter device and a receiver device. For the network traffic coming from the destination server 502 and flowing in a downstream direction, herein referred to as a "downstream data flow", towards the STA 516, the destination server 502 may be a source device with the access point 504 as the transmitter device and the STA 516 may be the receiver device. For the network traffic coming from the STA 516 and flowing in an upstream direction, herein referred to as an "upstream data flow", towards the destination server 502, the STA 516 may be the source device with the access point 504 as the transmitter device and the destination server 502 may be the receiver device.

In a number of embodiments, the higher protocol layer 506A may include a network layer herein referred to as "layer 3". The layer 3 may utilize Internet Protocol (IP) addresses to uniquely identify the source device and the destination device and determine an optimal path for data to travel between the source device and the destination device. In a variety of embodiments, the higher protocol layer 506A may include a transport layer herein referred to as "layer 4". The layer 4 may manage network traffic between the source device and the destination device to ensure complete data transfers. The layer 4 may utilize transport layer protocols, for example, Transmission Control Protocol (TCP), User Datagram Protocol (UDP), Datagram Congestion Control Protocol (DCCP), Stream Control Transmission Protocol (SCTP), or the like to control the volume of data, the destination for transmitting the data, and a rate of transmitting the data. In further embodiments, the higher protocol layer 506A can be any other layer above layer 4. The access point 504 may receive data from the higher protocol layer 506A such as the layer 3, the layer 4, or the like, and encapsulate the data into frames, each with a source address and a destination address, in the lower protocol layer 506B. When the access point 504 receives frames from the STA 516, the lower protocol layer 506B may decapsulate the frames to extract a payload and forward the data to the higher protocol layer 506A for processing. In the embodiments illustrated in FIG. 5, the access point 504 may implement dual queuing for L4S and non-L4S data packets at the higher protocol layer 506A in a plurality of configurations.

The higher protocol layer 506A may be operably coupled to the lower protocol layer 506B via a management interface 508. The management interface 508 may refer to a structured communication entity that allows exchange of data between the higher protocol layer 506A and the lower protocol layer 506B. The management interface 508 may invoke layer management functions, for example, handing off data packets correctly between the higher protocol layer 506A and the lower protocol layer 506B. In various embodiments, the management interface 508 may be a MAC-SAP. In more embodiments, the management interface 508 may be an MLME. The MLME may communicate with the lower protocol layer 506B, for example, the MAC sublayer, and handle higher-level management functions and decisions that influence the operation of the MAC sublayer. The MLME may also communicate with the higher protocol layer 506A to inform the higher protocol layer 506A about the state of the wireless communication network, any security procedures, or changes in a network topology. In additional embodiments, the higher protocol layer 506A and the lower protocol layer 506B may communicate with each other by exchanging service primitives through the management interface 508.

Consider an example where network traffic from the destination server 502 flows in the downstream direction towards the STA 516. The access point 504 may receive the downstream data flow including a plurality of downstream data packets from the destination server 502, through the higher protocol layer 506A. In further embodiments, the downstream data flow may be indicative of a source address, for example, a source IP address, associated with the destination server 502, and a destination address, for example, a destination IP address, associated with the STA 516. The downstream data packets received in the downstream data flow may be classified and distinguished into L4S data packets and non-L4S/classic congestion control data packets to determine whether the data packets should be stored in L4S queues 510A and 510C or non-L4S/classic queues 510B and 510D in the higher protocol layer 506A. When a MAC queuing structure cannot be modified in the lower protocol layer 506B, in still more embodiments, L4S dual queues 510A and 510C may be implemented above the lower protocol layer 506B. That is, the L4S dual queues 510A and 510C may be implemented in the higher protocol layer 506A including, for example, layer 3, layer 4, or the like. In still further embodiments, the L4S queues 510A and 510C in the higher protocol layer 506A may be low latency queues configured to store the downstream L4S data packets from the received downstream data flow, and the non-L4S queues 510B and 510D may be non-L4S/classic queues configured to store non-L4S data packets from the received downstream data flow. In still additional embodiments, the higher protocol layer 506A may implement the dual queues 510A, 510B, 510C, and 510D for storing L4S data packets and non-L4S/classic data packets based on their traffic class. For example, the higher protocol layer 506A may implement the dual queues 510A and 510C for L4S Best Effort (BE) data packets and L4S video (VI) data packets, respectively. The higher protocol layer 506A may implement L4 and non-L4S queues for other traffic classes (or access categories) such as the L4S voice (VO) data packets. Similarly, the higher protocol layer 506A may implement the dual queues 510B and 510D for non-L4S BE data packets and non-L4S VI data packets, respectively. In some more embodiments, the access point 504 may execute a queuing mechanism that prioritizes transmission of the L4S data packets in the L4S queues 510A and 510C over the non-L4S data packets in the non-L4S queues 510B and 510D. The L4S data packets in the L4S queues 510A and 510C may experience downstream congestion, for example, if the destination server 502 transmits the L4S data packets at a higher speed than the access point 504 can process and deliver to the STA 516. In yet various embodiments, the higher protocol layer 506A may transmit the downstream L4S packets from the L4S dual queues 510A and 510C to transmit queues 510F and 510G in the lower protocol layer 506B, respectively, via the management interface 508.

The lower protocol layer 506B may receive the downstream L4S data packets from the higher protocol layer 506A via the management interface 508. The downstream L4S data packets may undergo downstream queuing in the lower protocol layer 506B, where the downstream L4S data packets are stored in the transmit queues, for example, the queues 510E, 510F, 510G, and 510H, as illustrated in FIG. 5. The transmit queues 510E, 510F, 510G, and 510H are herein collectively referred to as "the transmit queues 510E - 510H". The transmit S queues 510E - 510H in the lower protocol layer 506B may be low latency queues configured to store the downstream data packets based on their traffic class. In yet more embodiments, the transmit queues 510E - 510H may be defined by Access Categories (ACs), with each access category being associated with a respective priority level. The access categories may include, for example, a BK (background) access category, a BE (best effort) access category, a VI (Video) access category, and a VO (voice) access category, denoted as AC_BK, AC_BE, AC_VI, and AC_VO, respectively. In still yet more embodiments, the access categories may be in order of priority, from highest to lowest priority, for example: AC_VO, AC_VI, AC_BE, and AC_BK. The transmit queues 510E - 510H may buffer one or more downstream L4S data packets of the downstream data flow. By way of a non-limiting example, in many further embodiments, the queuing mechanism may queue the downstream L4S data packets received from the higher protocol layer 506A into the transmit queues 510E, 510F, 510G, and 510H defined, for example, as an AC_BK queue, an AC_BE queue, an AC_VI queue, and an AC_VO queue, respectively, as illustrated in FIG. 5. For example, the lower protocol layer 506B may store the downstream L4S BE and VI packets from the L4S dual queues 510A and 510C in the higher protocol layer 506A into the AC_BE transmit queue 510F and the AC_VI transmit queue 510G in the lower protocol layer 506B, respectively.

In many additional embodiments, the higher protocol layer 506A may determine when downstream L4S congestion is experienced in the L4S queues 510A and 510C. In still yet further embodiments, the access point 504 may further include an L4S congestion detector 512 implemented in the higher protocol layer 506A. In still yet additional embodiments, the L4S congestion detector 512 may be configured to detect the downstream L4S congestion in the higher protocol layer 506A. In several embodiments, the L4S congestion detector 512 may be configured to inspect each of the L4S queues, for example, the L4S queues 510A and 510C that store, for example, L4S BE data packets and L4S VI data packets, respectively, in the higher protocol layer 506A, and detect the downstream L4S congestion as follows. The L4S congestion detector 512 may determine a count of the downstream L4S data packets in each of the L4S queues 510A and 510C and compare the count of the downstream L4S data packets with a threshold count corresponding to the L4S queue 510A or 510C. The L4S congestion detector 512 may detect the congestion based on the count of the downstream L4S data packets in each of the L4S queues 510A and 510C exceeding the corresponding threshold count.

In numerous additional embodiments, to signal the downstream L4S congestion faster, the higher protocol layer 506A may request the lower protocol layer 506B to transmit layer 2 signaling for L4S congestion indication for downstream L4S packets that are already queued in the lower protocol layer 506B (for the TID or the SCSID of the downstream data flow where the congestion is experienced) and may soon be transmitted. Signaling of the downstream L4S congestion through the layer 2 or the MAC sublayer is herein referred to as "layer 2 signaling". The embodiments illustrated in FIG. 5 are described in the context of forward signaling the downstream L4S congestion by signaling through the lower protocol layer 506B, for example, layer 2 or the MAC sublayer (also referred to as the "MAC sublayer 506B"). The L4S congestion detector 512 may transmit a request, from the higher protocol layer 506A, indicating the detection of the downstream L4S congestion to the management interface 508, for example, the MAC-SAP or the MLME. In further additional embodiments, on receiving this request from the L4S congestion detector 512, the access point 504 may generate a southbound, service primitive 514 named, for example, L4S-CONG_SIGNAL.request, at the management interface 508 to indicate that the downstream L4S congestion is experienced at the higher protocol layer 506A. In a non-limiting example, the access point 504 may generate the "L4S-CONG_SIGNAL.request" service primitive 514 in the following format:

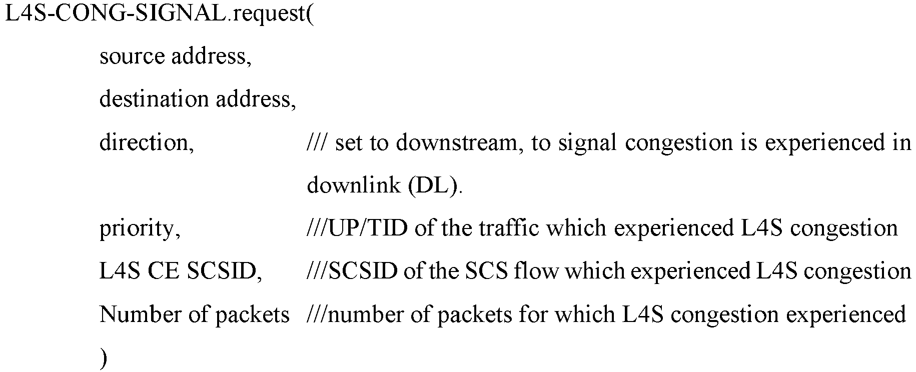

Upon receiving the "L4S-CONG_SIGNAL.request" service primitive 514 from the management interface 508, in many embodiments, the lower protocol layer 506B may mark the number of downstream L4S packets indicated in the "L4S-CONG_SIGNAL.request" service primitive 514 with layer 2 congestion signaling, for example, using A-control signaling, to provide a faster congestion notification. In many embodiments, the A-control signaling may be executed through an A-control subfield of an HE variant HT control field defined in a header of a data packet, a QoS null frame, or a management frame.

The access point 504 may transmit an indication 524 of the detected downstream L4S congestion to the STA 516 which is a destination of the downstream L4S data packets. To transmit the indication 524 of the detected congestion to the STA 516, in a number of embodiments, the access point 504 may generate an MPDU including a value indicative of the downstream L4S congestion in the downstream flow identified by a TID, SCSID, or access category, and transmit the MPDU to the STA 516. In a variety of embodiments, the MPDU may be configured to indicate a count of the downstream L4S data packets in the L4S queue 510A or 510C that are experiencing the congestion, a percentage of the downstream L4S data packets in the L4S queue 510A or 510C that are experiencing the congestion, or a probability of congestion being experienced for the downstream L4S data packets in the L4S queue 510A or 510C. In various embodiments, the MPDU may include a management frame, a control frame, or a beacon frame. In still further embodiments, in a case where the MPDU comprises the management frame, the indication of the detected congestion is carried in a frame body of the management frame. The downstream L4S data packets which experienced the congestion in any of the L4S queues, for example, the L4S queue 510A or the L4S queue 510C, may not be marked for CE (ECN=11) in their IP headers at the lower protocol layer 506B. Marking at the lower protocol layer 506B may be a layering violation and may require these downstream L4S data packets to be dequeued, decrypted, and then marked. For faster congestion signaling, in more embodiments, the access point 504 may mark the MPDUs that are already in a transmit queue 510E - 510H, at the lower protocol layer 506B to transmit a congestion indicator faster to the STA 516, which then transmits a congestion indication feedback to the destination server 502 that generated the downstream L4S data packets, so that the data rate can be scaled back sooner to avoid any packet drops. In additional embodiments, the access point 504 may transmit the downstream L4S data packets to the STA 516 after transmitting the indication 524 of the detected congestion. In these embodiments, the MPDU is configured to direct the STA 516 to mark at least one downstream L4S data packet with a congestion indicator.

In further embodiments, to transmit the indication 524 of the detected congestion, the access point 504 may update a layer 2 header in an MPDU of at least one downstream L4S data packet, that is already queued in the transmit queue 510E - 510H, with a congestion indication control field, and transmit the downstream L4S data packet(s) to the STA 516. Thus, this downstream L4S data packet(s) is ahead of the downstream L4S data packet(s) that experience the congestion. In still further embodiments, the congestion indication control field may be indicative of a count of the downstream L4S data packets in the L4S queue 510A or 510C that are experiencing the congestion, a value indicative of the congestion in the downstream, a percentage of the downstream L4S data packets that are experiencing the congestion, or a probability of congestion being experienced for the downstream L4S data packets. The congestion indication control field may include, for example, an A-control subfield of the HE variant HT defined to carry layer 2 signaling of the L4S congestion.

In still additional embodiments, the access point 504 may signal the downstream L4S packets that are already queued in the transmit queue 510E, 510F, 510G, or 510H at the lower protocol layer 506B for L4S congestion, for example, using the A-control subfield in MAC headers of those downstream L4S packets, via the MPDUs. When the STA 516 receives such a downstream L4S packet, the STA 516 may perform CE marking (ECN=11) in an IP header of the downstream L4S packet before the downstream L4S packet is delivered to a higher protocol layer 522, for example, layer 3, of the STA 516, or in some more embodiments, may request the higher protocol layer 522 to perform the CE marking. The marking of ECN = 11 may denote L4S CE, which may signal the downstream L4S congestion without causing significant delays. For example, if three (3) downstream L4S packets have experienced downstream L4S congestion, three already queued packets of the same downstream L4S flow in a transmit queue at the lower protocol layer 506B may get their layer 2 header updated to signal, in the A-control subfield, that these downstream L4S packets should be CE marked at the STA 516. In yet more embodiments, the A-control signaling in one of the downstream L4S packets may indicate the count of the packets of the same downstream data flow (or TID or SCSID) that should be CE marked. For example, if three downstream L4S packets need to be CE marked, the A-control sub-field may indicate in one of the downstream L4S packets that three downstream L4S packets should be CE marked at the STA 516.

In still yet more embodiments, the receiver 518 of the STA 516 may receive the indication 524 of the downstream L4S congestion in the L4S queue 510A or 510C of the access point 504, through the lower protocol layer 520. The STA 516 may receive at least one downstream L4S data packet of the downstream L4S data packets buffered in the transmit queue 510F or 510G corresponding to the L4S queue 510A or the L4S 510C, respectively. In many further embodiments, the higher protocol layer 522, for example, layer 3, may be above the lower protocol layer 520. In many additional embodiments, the lower protocol layer 520 may be configured to perform functions similar to the lower protocol layer 506B of the access point 504. The lower protocol layer 520 may handle communication between the STA 516 and the access point 504. The higher protocol layer 522 may perform higher-level functions and web application services including, for example, web browsing, transferring files, messaging, etc.

The STA 516 may receive the indication 524 of the downstream L4S congestion and the downstream L4S data packet(s) at the lower protocol layer 520 via the receiver 518. The STA 516 may mark the downstream L4S data packet(s) with a congestion indicator based on the indication 524 of the downstream L4S congestion. In still yet further embodiments, the indication 524 of the downstream L4S congestion may be received through the congestion indication control field in the MPDU or the management frame. For example, the congestion indicator may be an L4S CE mark =1 in the A-control sub-field, indicating that the STA 516 should CE mark the downstream L4S data packet(s) with ECN = 11. In still yet additional embodiments, the congestion indication control field may be indicative of a packet count for marking with the congestion indicator. In several embodiments, the STA 516 may mark the downstream L4S data packet(s) with the congestion indicator further based on the packet count.

In numerous embodiments, the STA 516 may transmit a request to the higher protocol layer 522 to perform the marking. When the STA 516 receives the layer 2 signaling for CE marking the downstream L4S data packet(s) in the IP header, in numerous additional embodiments, the STA 516 may request the higher protocol layer 522 to add that marking to the downstream L4S data packet(s). These embodiments assume that the lower protocol layer 520 is not performing the CE marking itself, since CE marking is a layer 3 operation. In further additional embodiments, the STA 516 may generate, for example, a "MA-UNITDATA.indication" service primitive 526 to indicate that the corresponding downstream L4S data packet(s) must be CE marked at the higher protocol layer 522 by having the higher protocol layer 522 set ECN=11 in the IP header. In a non-limiting example, the STA 516 may generate the "MA-UNITDATA.indication" service primitive 526 in the following format:

```
 MA-UNITDATA.indication(
         source address,
         destination address,
         routing information,
         data,
         reception status,
         priority,
          ...
         MSDU format,
         L4S CE marking needed,
         Number of packets for CE marking )
```

where "L4S CE marking needed" indicates that the corresponding downstream L4S data packet(s) must be CE marked, for example, by setting ECN=11 in the IP header. The "MA-UNITDATA.indication" service primitive 526 may optionally also include "Number of packets for CE marking" that indicates that the higher protocol layer 522 must CE mark that many number of packets by setting ECN=11 in the IP header.

The STA 516 may provide this "MA-UNITDATA.indication" service primitive 526 to the higher protocol layer 522. When the higher protocol layer 522 receives this "MA-UNITDATA.indication" service primitive 526, the higher protocol layer 522 may mark the downstream L4S data packet(s) with a congestion indicator. The congestion indicator may be an ECN indicator indicative of a CE value. For example, the higher protocol layer 522 may update the IP header by setting ECN=11 for that downstream L4S data packet(s). After the CE marking is completed, the STA 516 may transmit a feedback signal with the marked downstream L4S data packet(s) or congestion marked acknowledgments to the destination server 502, which may interpret the CE marking as an indication of the downstream L4S network congestion and an indication to scale down a data rate or a rate of transmitting data to the STA 516. The destination server 502 may then adjust a data transmission rate, for example, reduce the data transmission rate, in response to the indicated downstream L4S congestion, to reduce the downstream L4S congestion. The devices and methods discussed herein allow the destination server 502 to quickly respond to the downstream L4S congestion by allowing transmission of a faster downstream congestion notification to the destination server 502 from the STA 516.

Although a specific embodiment for a system 500 illustrating a forward signaling of downstream congestion detected in L4S queues implemented in a higher protocol layer suitable for carrying out the various steps, processes, methods, and operations described herein is discussed with respect to FIG. 5, any of a variety of systems and/or processes may be utilized in accordance with embodiments of the disclosure. For example, if the STA 516 does not support layer 2 signaling for L4S congestion, the lower protocol layer 506B at the access point 504 can take other actions to slow down downstream data rate coming from the destination server 502. For example, the access point 504 may reduce downlink resource unit allocation, apply throttling policies, reducing modulation and coding rate, or the like to slow down the downstream data rate, which can ease the downstream L4S congestion. The elements depicted in FIG. 5 may also be interchangeable with other elements of FIGS. 1 - 4 and FIGS. 6 - 13 as required to realize a particularly desired embodiment.

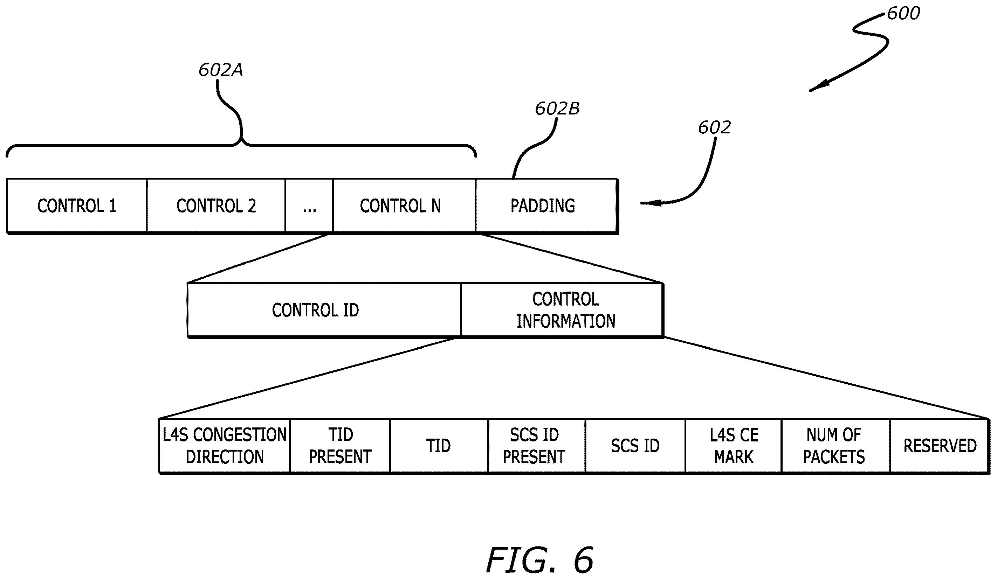

Referring to FIG. 6, a schematic illustration of a control information field format 600 for a forward signaling of downstream congestion in accordance with various embodiments of the disclosure is shown. In many embodiments, the control information field format 600 may be configured to insert a congestion indicator indicative of a congestion associated with a data flow, for example, a downstream L4S data flow. The downstream L4S data flow may come from a network device such as a destination server and flow in a downstream direction towards a wireless device such as a station (STA). The control information field format 600 may be utilized for signaling downstream L4S congestion and requesting the STA to CE mark one or more downstream L4S packets. In a number of embodiments, the control information field format 600 may include an A-control subfield 602 of an HE variant HT control field defined to carry layer 2 L4S congestion signaling. The A-control subfield 602 may include a control list 602A with a sequence of one or more control subfields, for example, Control 1, Control 2, ..., Control N, and a padding subfield 602B. In a variety of embodiments, the control list 602A may extend to a variable number of bits, and the padding subfield 602B may extend to 0 or more bits. Each control subfield may include a control identifier (ID) subfield and a control information subfield. The control information subfield may carry control information that depends on a control ID value indicated in the control ID subfield. The length of control information subfield may depend on the length of the control information subfield in bits. The padding subfield 602B may follow the last control subfield and may be set to a sequence of zeros to ensure the length of the A-control subfield 602 carried in the HT control field is, for example, 30 bits.

In various embodiments, the control information subfield may include an L4S congestion direction subfield, a TID present subfield, a TID subfield, an SCS ID present subfield, an SCS ID subfield, an L4S CE mark subfield, a number of packets subfield, and/or a reserved subfield. The L4S congestion direction subfield may indicate a direction, for example, an upstream direction or a downstream direction, where the L4S congestion is experienced. For example, the L4S congestion direction subfield may include a value of "1" to indicate the upstream direction where the L4S congestion is experienced at the access point or a value of "0" to indicate a downstream direction where the L4S congestion is experienced at the access point. In more embodiments, the TID may not be present if A-control signaling is carried in a data packet with the same TID. In additional embodiments, the SCS ID may not be present if no SCS stream was established. The TID present subfield and the SCS ID present subfield may, therefore, be set to 0. The L4S CE mark subfield may include a value of 1 to indicate that the STA should CE mark the data packet, for example, by setting ECN = 11. The number of packets subfield may indicate the number of data packets to be CE marked. The number of packets subfield may be set to 1, if only the current data packet needs to be CE marked. If multiple data packets need to be CE marked, the number of packets subfield may indicate that number, and the STA may be signaled to CE mark that many data packets of the same downstream L4S data flow as the data packet containing the congestion indication in the A-control subfield 602. The TID subfield and/or the SCS ID subfield may be present to indicate the data packets of which TID or SCS ID need to be CE marked.

Although a specific embodiment for a control information field format 600 for a forward signaling of downstream congestion suitable for carrying out the various steps, processes, methods, and operations described herein is discussed with respect to FIG. 6, any of a variety of systems and/or processes may be utilized in accordance with various embodiments of the disclosure. For example, other formats for the control information subfield in an L4S congestion indication control subfield other than the A-control subfield 602 can be utilized to convey a similar set of parameters. The elements depicted in FIG. 6 may also be interchangeable with other elements of FIGS. 1 - 5 and FIGS. 7A - 13 as required to realize a particularly desired embodiment.

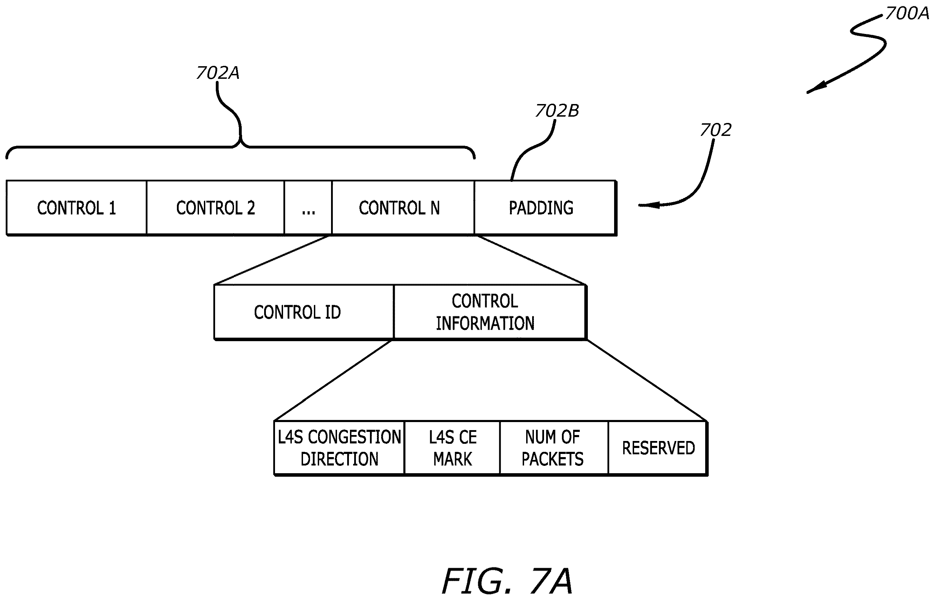

Referring to FIG. 7A, a schematic illustration of another control information field format 700A for a forward signaling of downstream congestion in accordance with various embodiments of the disclosure is shown. In many embodiments, the control information field format 700A may be configured to insert a congestion indicator indicative of a congestion associated with one or more data flows, for example, one or more downstream L4S data flows. The downstream L4S data flow(s) may come from a network device such as a destination server and flow in a downstream direction towards a wireless device such as a station (STA). The STA may receive the downstream L4S data flows from the destination server via an access point. In a number of embodiments, a compact control information field format 700A as illustrated in FIG. 7A may be utilized for performing layer 2 signaling, for example, using A-control signaling, to provide a faster congestion notification. The control information field format 700A may be utilized for signaling downstream L4S congestion and requesting the STA to CE mark one or more downstream L4S packets that experience congestion, as indicated by the access point. In a variety of embodiments, the control information field format 700A may include an A-control subfield 702 of an HE variant HT control field defined to carry layer 2 L4S congestion signaling. The A-control subfield 702 may include a control list 702A with a sequence of one or more control subfields, for example, Control 1, Control 2, ..., Control N, and a padding subfield 702B. In various embodiments, the control list 702A may extend to a variable number of bits, and the padding subfield 702B may extend to 0 or more bits. Each control subfield may include a control identifier (ID) subfield and a control information subfield. The control information subfield may carry control information that depends on a control ID value indicated in the control ID subfield. The padding subfield 702B may follow the last control subfield and may be set to a sequence of zeros to ensure the length of the A-control subfield 702 carried in the HT control field is, for example, 30 bits.

In more embodiments, the control information subfield may include a reduced number of subfields, namely, an L4S congestion direction subfield, an L4S CE mark subfield, a number of packets subfield, and a reserved subfield. The L4S congestion direction subfield may indicate a direction, for example, an upstream direction or a downstream direction, where the L4S congestion is experienced. For example, the L4S congestion direction subfield may include a value of "1" to indicate the upstream direction where the L4S congestion is experienced at the access point or a value of "0" to indicate a downstream direction where the L4S congestion is experienced at the access point. The L4S CE mark subfield may include a value of 1 to indicate that the STA should CE mark the data packet, for example, by setting ECN = 11. The number of packets subfield may indicate the number of data packets to be CE marked. The number of packets subfield may be set to 1, if only the current data packet needs to be CE marked. If multiple data packets need to be CE marked, the number of packets subfield may indicate that number, and the STA may be signaled to CE mark that many data packets of the same downstream L4S data flow as the data packet containing the congestion indication in the A-control subfield 702.

In additional embodiments, the access point and the STA can signal their capability for supporting L4S congestion indication at layer 2 including a MAC sublayer. In further embodiments, the downstream L4S congestion may be signaled in 802.11bn as part of Ultra High Reliability (UHR) capabilities or another element/field. In still more embodiments, the access point may signal this capability in management frames such as beacon, probe response, and (re)association response, or another management frame. In some further embodiments, the STA may signal this capability in management frames such as (re)association request or another management frame.

Although a specific embodiment for another control information field format 700A for a forward signaling of downstream congestion suitable for carrying out the various steps, processes, methods, and operations described herein is discussed with respect to FIG. 7A, any of a variety of systems and/or processes may be utilized in accordance with various embodiments of the disclosure. For example, in yet various embodiments, "CE marking required" may be indirectly signaled by utilizing other fields of the control information field format 700A. The elements depicted in FIG. 7A may also be interchangeable with other elements of FIGS. 1 - 6 and FIGS. 7B - 13 as required to realize a particularly desired embodiment.

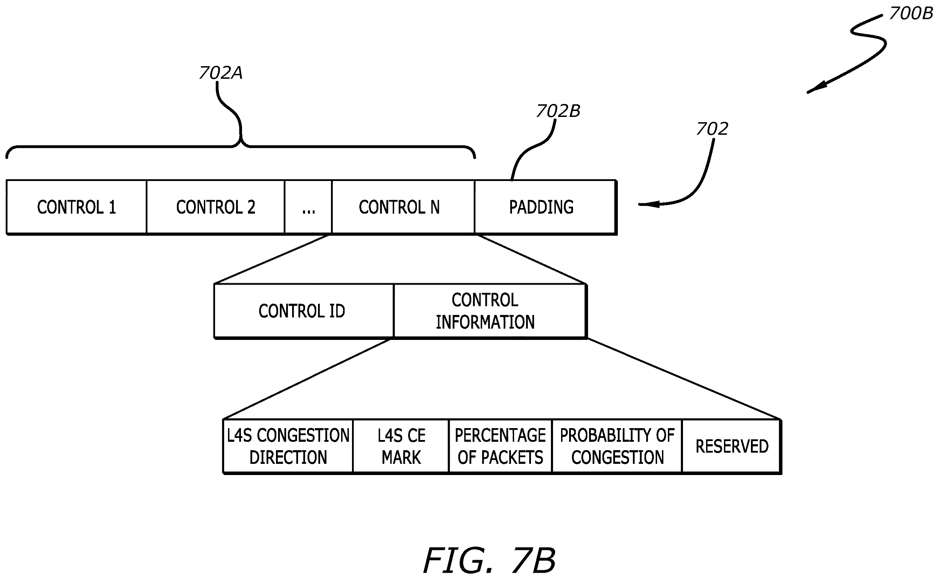

Referring to FIG. 7B, a schematic illustration of another control information field format 700B for a forward signaling of downstream congestion in accordance with various embodiments of the disclosure is shown. In many embodiments, the control information field format 700B may be configured to insert a congestion indicator indicative of a congestion associated with one or more data flows, for example, one or more downstream L4S data flows. The downstream L4S data flow(s) may come from a network device such as a destination server and flow in a downstream direction towards a wireless device such as an STA. The STA may receive the downstream L4S data flows from the destination server via an access point. In a number of embodiments, a compact control information field format 700B as illustrated in FIG. 7B may be utilized for performing layer 2 signaling, for example, using A-control signaling, to provide a faster congestion notification. The control information field format 700B may be utilized for signaling downstream L4S congestion and requesting the STA to CE mark one or more downstream L4S packets that experience congestion, as indicated by the access point. In a variety of embodiments, the control information field format 700B may include an A-control subfield 702 of an HE variant HT control field defined to carry layer 2 L4S congestion signaling. The A-control subfield 702 may include a control list 702A with a sequence of one or more control subfields, for example, Control 1, Control 2, ..., Control N, and a padding subfield 702B as described in the foregoing description of FIG. 7A. Each control subfield may include a control identifier (ID) subfield and a control information subfield. In more embodiments, the control information subfield may include a reduced number of subfields, namely, an L4S congestion direction subfield, an L4S CE mark subfield, a percentage of packets subfield, a probability of congestion subfield, and a reserved subfield. The percentage of packets subfield may indicate the percentage of data packets that are experiencing congestion. The probability of congestion subfield may indicate a probability value for data packets experiencing congestion.

Although a specific embodiment for another control information field format 700B for a forward signaling of downstream congestion suitable for carrying out the various steps, processes, methods, and operations described herein is discussed with respect to FIG. 7B, any of a variety of systems and/or processes may be utilized in accordance with various embodiments of the disclosure. For example, in yet various embodiments, the control information field format 700B can also include various other subfields described in the foregoing description of FIGS. 6 and 7A. The elements depicted in FIG. 7B may also be interchangeable with other elements of FIGS. 1 - 6 and FIGS. 8 - 13 as required to realize a particularly desired embodiment.

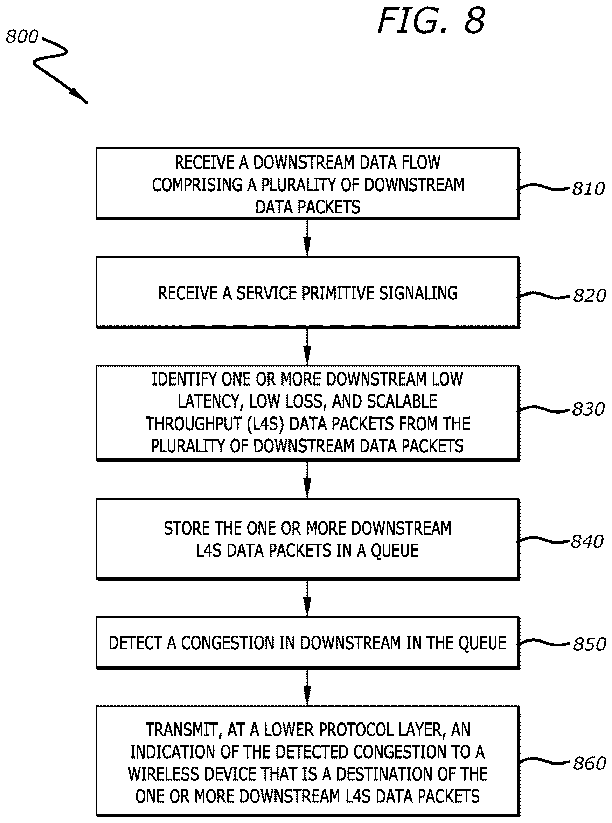

Referring to FIG. 8, a flowchart depicting a process 800 for forward signaling of downstream congestion in accordance with various embodiments of the disclosure is shown. The process 800 may be implemented at an access point. In many embodiments, the process 800 may receive a downstream data flow comprising a plurality of downstream data packets (block 810). The downstream data flow may refer to network traffic coming from a network device such as a destination server and flowing in a downstream direction towards a wireless device such as a station (STA). The downstream data packets in the downstream data flow may include L4S data packets and non-L4S data packets. The downstream data flow including the downstream data packets may be received at the access point. In a number of embodiments, the process 800 may receive the downstream data flow at a higher protocol layer implemented by the access point. The higher protocol layer may include layer 3, layer 4, or the like.

In one or more embodiments, the process 800 may receive a service primitive signaling (block 820). As a lower protocol layer, for example, layer 2 including a MAC sublayer, typically does not inspect higher protocol layer headers, for example, layer 3 headers, in various embodiments, the process 800 may implement a southbound, service primitive signaling from a higher protocol layer to the lower protocol layer to indicate which downstream data packets among the plurality of downstream data packets are L4S packets. In more embodiments, the process 800 may generate the service primitive signaling named, for example, "MA-UNITDATA.request" primitive, at a management interface or at the higher protocol layer, to signal the lower protocol layer regarding which downstream data packets are the downstream L4S data packets. The management interface, for example, a MAC-SAP or an MLME, may be configured between the higher protocol layer and the lower protocol sublayer. In additional embodiments, the process 800 may add an L4S parameter or an ECN parameter to the "MA-UNITDATA.request" service primitive to indicate the downstream L4S data packets from among the plurality of downstream data packets received in the downstream data flow.

In a variety of embodiments, the process 800 may identify one or more downstream L4S data packets from the plurality of downstream data packets (block 830). The service primitive signaling may allow the lower protocol layer to identify the downstream L4S packets without requiring the lower protocol layer to process ECN-Capable Transport (ECT) bits in the IP headers of the downstream data packets at the lower protocol layer. For example, the process 800 may use the ECN parameter or the L4S parameter in the service primitive signaling to identify one or more downstream L4S data packets.

In further embodiments, the process 800 may store the one or more downstream L4S data packets in a queue (block 840). In still more embodiments, the process 800 can implement a dual queue AQM logic. In still further embodiments, the process 800 may store the one or more downstream L4S data packets in an L4S queue, for example, in an AQM queue. The process 800 may store the one or more downstream L4S data packets in the L4S queue implemented, for example, in the MAC sublayer. In an embodiment, the process 800 may employ one or more ECN classifiers in the higher protocol layer to classify the downstream L4S data packets for storage in one or more L4S queues in the MAC sublayer based on access categories. For example, the MAC sublayer may store the downstream L4S data packets for video (VI) data and best effort (BE) data in an L4S AC_VI queue and an L4S AC_BE queue, respectively.

In still additional embodiments, the process 800 may detect a congestion in downstream in the queue (block 850). In some more embodiments, the process 800 may implement an L4S congestion detector in the MAC sublayer to detect a downstream congestion in each L4S queue. In yet various embodiments, the process 800 may detect the downstream congestion based on queue depth. For example, the process 800 may continuously inspect the queue depth and detect the downstream congestion if the queue depth is greater than or equal to a threshold count of data packets in the L4S queue. In yet more embodiments, the process 800 may configure the threshold count to maximize throughput. In still yet more embodiments, the process 800 may employ minimum and maximum queue depth thresholds to detect the downstream congestion.

In many further embodiments, the process 800 may transmit, at the lower protocol layer, an indication of the detected congestion to a wireless device that is a destination of the one or more downstream L4S data packets (block 860). To transmit the indication of the detected congestion to the wireless device, in many additional embodiments, the process 800 may generate an MPDU including a congestion indication control field having a value indicative of the congestion associated with the downstream data flow, and transmit the MPDU to the wireless device. In still yet further embodiments, the congestion indication control field may also indicate a count of the downstream L4S data packets in the L4S queue that are experiencing the congestion, a percentage of downstream L4S data packets in the queue that are experiencing the congestion, or a probability of congestion being experienced for the downstream L4S data packets in the queue. In still yet additional embodiments, the MPDU may be a management frame, a control frame, or a data frame. In many further embodiments, the process 800 may update an MPDU of at least one downstream L4S data packet in the queue with the congestion indication control field. The downstream L4S data packet whose MPDU is updated with the congestion indication control field may be experiencing the congestion in the queue. In some more embodiments, the downstream L4S data packet, whose MPDU is updated with the congestion indication control field, itself may not be experiencing the congestion but may be ahead of another downstream L4S data packet that is experiencing the congestion. In such embodiments, the indication of the detected congestion is transmitted prior to transmitting the another downstream L4S data packet that experiences the congestion.

Although a specific embodiment for a process 800 for forward signaling of downstream congestion suitable for carrying out the various steps, processes, methods, and operations described herein is discussed with respect to FIG. 8, any of a variety of systems and/or processes may be utilized in accordance with embodiments of the disclosure. For example, instead of detection of the downstream congestion at the access point, the network device may be configured to detect the downstream congestion by utilizing different methods such as calculating round-trip times between transmitting requests and receiving acknowledgments and determining higher round-trip times, monitoring throughput against historical averages, etc. The elements depicted in FIG. 8 may also be interchangeable with other elements of FIGS. 1 - 7 and FIGS. 9 - 13 as required to realize a particularly desired embodiment.

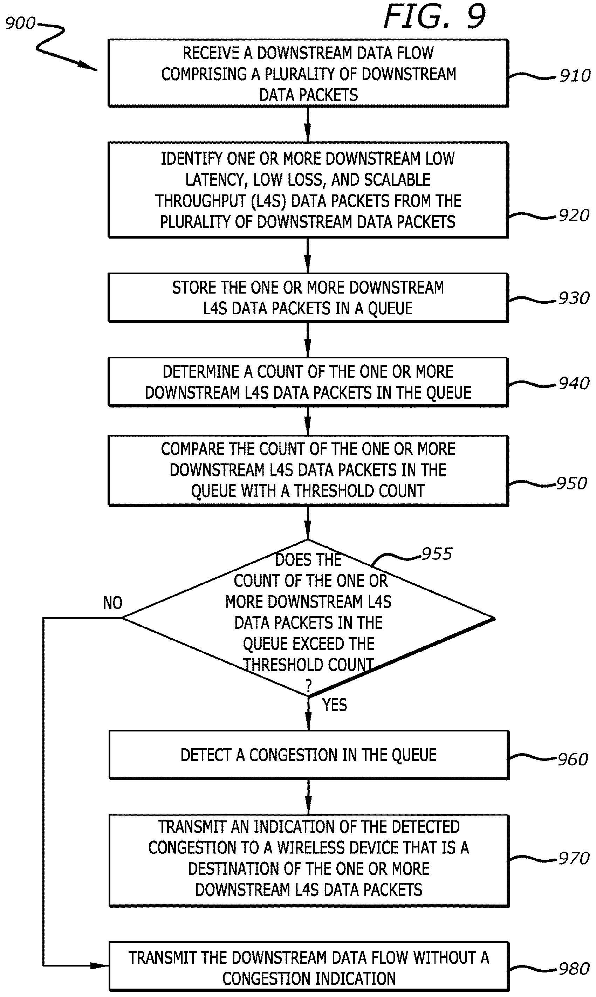

Referring to FIG. 9, a flowchart depicting a process 900 for forward signaling of downstream congestion in accordance with various embodiments of the disclosure is shown. The process 900 may be implemented at an access point. In many embodiments, the process 900 may receive a downstream data flow comprising a plurality of downstream data packets (block 910). The downstream data flow may refer to network traffic coming from a network device such as a destination server and flowing in a downstream direction towards a wireless device such as a station (STA). The downstream data packets in the downstream data flow may include L4S data packets and non-L4S data packets. The downstream data flow including the downstream data packets may be received at the access point. In a number of embodiments, the process 900 may receive the downstream data flow at a higher protocol layer implemented by the access point. The higher protocol layer may include layer 3, layer 4, or the like.

In a variety of embodiments, the process 900 may identify one or more downstream L4S data packets from the plurality of downstream data packets (block 920). As a lower protocol layer, for example, layer 2 including a MAC sublayer, typically does not inspect higher protocol layer headers, for example, layer 3 headers, in various embodiments, the process 900 may implement a southbound, service primitive to signal to the MAC sublayer which downstream data packets are L4S packets. This service primitive may allow the MAC sublayer to identify the downstream L4S packets without requiring the MAC sublayer to process ECN-Capable Transport (ECT) bits in the IP headers of the downstream data packets at the MAC sublayer. In more embodiments, the process 900 may generate a service primitive named, for example, "MA-UNITDATA.request", at a management interface, to signal which downstream data packets are the downstream L4S data packets to the MAC sublayer. The management interface, for example, a MAC-SAP or an MLME, may be configured between the higher protocol layer and the MAC sublayer. In additional embodiments, the process 900 may add an L4S parameter to the "MA-UNITDATA.request" service primitive to indicate the downstream L4S data packets from among the plurality of downstream data packets received in the downstream data flow.

In further embodiments, the process 900 may store the one or more downstream L4S data packets in a queue (block 930). The process 900 may store the one or more downstream L4S data packets in an L4S queue implemented, for example, in the MAC sublayer. In an embodiment, the process 900 may employ one or more ECN classifiers in the higher protocol layer to classify the downstream L4S data packets for storage in one or more L4S queues in the MAC sublayer based on access categories. For example, the MAC sublayer may store the downstream L4S data packets for video (VI) data and best effort (BE) data in an L4S AC_VI queue and an L4S AC_BE queue, respectively.

In still more embodiments, the process 900 may determine a count of the one or more downstream L4S data packets in the queue (block 940). The process 900 may continuously inspect and count the number of downstream L4S data packets stored in the L4S queue to determine a queue depth. The L4S queue may be dedicated hardware buffers utilized for storing the downstream L4S data packets. In still further embodiments, the process 900 may determine the count of the downstream L4S data packets stored in the L4S queue by accessing the L4S queue through specialized driver interfaces or hardware performance counters. These driver interfaces or hardware performance counters may allow the lower protocol layer, for example, the MAC sublayer, to query the number of downstream L4S data packets stored in the L4S queue. In still additional embodiments, the process 900 may determine a queue depth by accessing a data structure that stores the downstream L4S data packets awaiting transmission. In some more embodiments, the process 900 can maintain a counter indicative of the count of the downstream L4S data packets. In yet various embodiments, the process 900 may increment the counter when a new downstream L4S data packet is enqueued in the L4S queue. In yet more embodiments, the process 900 can maintain a separate counter corresponding to each count of the downstream L4S data packets associated with separate queues. In still yet more embodiments, the process 900 may count the number of downstream L4S data packets experiencing congestion, and then transmit the number, for example, through an MPDU, an 802.11 frame such as a management frame, a control frame, or a data frame, or the like, before transmitting the congested downstream L4S data packets to the wireless device, to reduce the latency/Round-Trip Time (RTT) to notify congestion.

In many further embodiments, the process 900 may compare the count of the one or more downstream L4S data packets in the queue with a threshold count (block 950). The threshold count may refer to a threshold number of downstream L4S data packets set by the access point for detecting a downstream congestion. The process 900 may determine the threshold count associated with the L4S queue. In many additional embodiments, the process 900 may determine the threshold count based on one or more of: a type of the downstream L4S data packets, priority of the downstream L4S data packets, Quality of Service (QoS) parameters of the downstream L4S data packets, etc. In still yet further embodiments, the process 900 can dynamically change or modify the threshold count based on network conditions, network demand, QoS requirements, etc. In still yet additional embodiments, the threshold count may be predetermined for different types of L4S queues defined by access categories including, for example, the BE access category, the VI access category, or the like. In several embodiments, the threshold count may be configurable by an operator. In several more embodiments, the threshold count can be different for different downstream L4S data flows associated with different applications implemented by the same wireless device. The process 900 may continuously or periodically count the number of downstream L4S data packets in the L4S queue and compare this count with the threshold count. In numerous embodiments, the process 900 can utilize threshold-based comparisons, moving averages, or other such comparison techniques based on network conditions, desired QoS parameters, etc.

In numerous additional embodiments, the process 900 may determine whether the count of the one or more downstream L4S data packets in the queue exceeds the threshold count (block 955). The process 900 may continuously or periodically determine whether the count of the downstream L4S data packets in the L4S queue exceeds the threshold count. In further additional embodiments, the process 900 may employ an interrupt-driven mechanism or periodic polling, depending on a design of the access point and management of its resources, to determine whether the count of the downstream L4S data packets in the L4S queue exceeds the threshold count. If the count of the downstream L4S packets in the L4S queue exceeds the threshold count, the process 900 may execute different actions depending on the specific configuration.

In response to determining the count of the one or more downstream L4S data packets in the queue exceeds the threshold count, in many embodiments, the process 900 may detect a congestion in the queue (block 960). In number of embodiments, the count of the downstream L4S data packets that are experiencing the congestion may correspond to a difference between the count of the downstream L4S data packets in the L4S queue and the threshold count. In a variety of embodiments, the process 900 may detect the congestion at the access point based on the count of the downstream L4S data packets exceeding the threshold count. If the downstream L4S data packets are delayed due to waiting in the queue for a long time, it suggests that the congestion associated with the downstream L4S data flow, herein referred to as "downstream L4S congestion", is being experienced at the access point. The process 900 may track and report the count of the downstream L4S data packets waiting in the L4S queue to allow the detection of the downstream L4S congestion.

In various embodiments, the process 900 may transmit an indication of the detected congestion to a wireless device that is a destination of the one or more downstream L4S data packets (block 970). To transmit the indication of the detected congestion to the wireless device, in more embodiments, the process 900 may generate an MPDU including a congestion indication control field having a value indicative of the congestion associated with the downstream data flow, and transmit the MPDU to the wireless device. In additional embodiments, the congestion indication control field may also indicate a count of the downstream L4S data packets in the L4S queue that are experiencing the congestion, a percentage of downstream L4S data packets in the queue that are experiencing the congestion, or a probability of congestion being experienced for the downstream L4S data packets in the queue. In further embodiments, the MPDU may be a management frame, a control frame, or a data frame.

However, in response to determining the count of the one or more downstream L4S data packets in the queue does not exceed the threshold count, in still more embodiments, the process 900 may transmit the downstream data flow without a congestion indication (block 980). When the process 900 determines that the count of the one or more downstream L4S data packets in the L4S queue does not exceed the threshold count, the process 900 may detect that there is no downstream congestion in the L4S queue. As such, the process 900 may be able to process and deliver the one or more downstream L4S data packets in the L4S queue to the wireless device without experiencing the downstream congestion. Therefore, the process 900 may proceed to transmit the downstream data flow to the wireless device without a congestion indication.

Although a specific embodiment for a process 900 for forward signaling of downstream congestion suitable for carrying out the various steps, processes, methods, and operations described herein is discussed with respect to FIG. 9, any of a variety of systems and/or processes may be utilized in accordance with embodiments of the disclosure. For example, instead of detecting the downstream congestion based on the count of the downstream L4S data packets in the L4S queue exceeding the corresponding threshold count, in still further embodiments, for Wi-Fi, the process 900 may detect the downstream congestion based on a RSSI of the wireless device. For example, if the RSSI of the wireless device is poor, the process 900 may request the access point to signal CE marking of more or all data packets for the downstream congestion as the likelihood of delivering the downstream L4S data packets is lower. In another example, if the RSSI of the wireless device is good, the process 900 may request the access point to signal CE marking of less data packets for the downstream congestion since likelihood of delivering the data packets (without requiring retries) is higher. The elements depicted in FIG. 9 may also be interchangeable with other elements of FIGS. 1 - 8 and FIGS. 10 - 13 as required to realize a particularly desired embodiment.

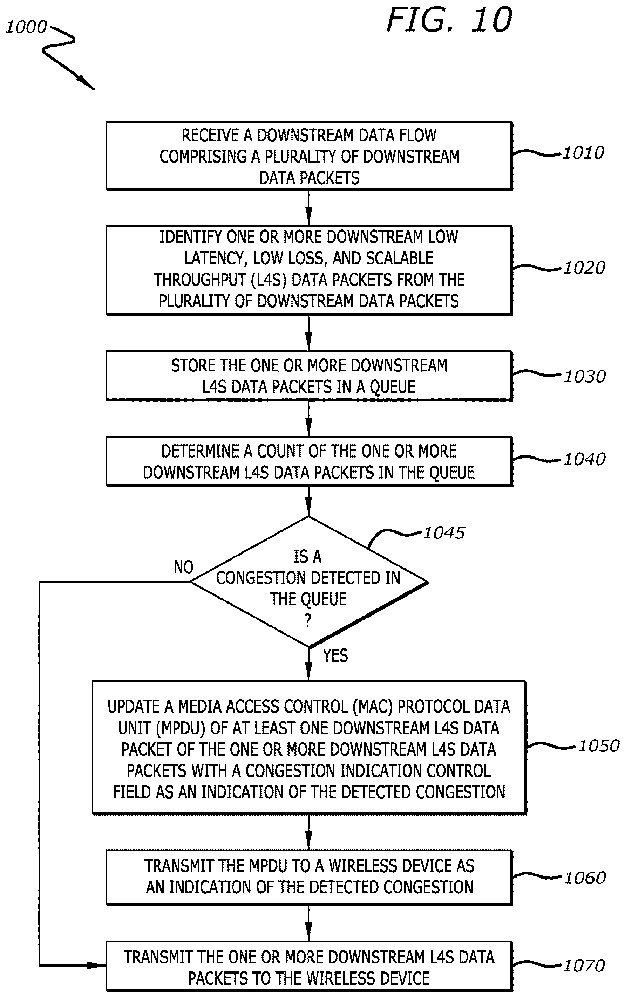

Referring to FIG. 10, a flowchart depicting a process 1000 for forward signaling of downstream congestion by utilizing an MPDU indication in accordance with various embodiments of the disclosure is shown. In many embodiments, the process 1000 may receive a downstream data flow comprising a plurality of downstream data packets (block 1010). The downstream data flow may refer to network traffic coming from a network device such as a destination server and flowing in a downstream direction towards a wireless device such as a station (STA). The downstream data packets in the downstream data flow may include L4S data packets and non-L4S data packets. The downstream data flow including the downstream data packets may be received at the access point. In a number of embodiments, the process 1000 may receive the downstream data flow at a higher protocol layer implemented by the access point. The higher protocol layer may include layer 3, layer 4, or the like.

In a variety of embodiments, the process 1000 may identify one or more downstream L4S data packets from the plurality of downstream data packets (block 1020). As a lower protocol layer, for example, layer 2 including a MAC sublayer, typically does not inspect higher protocol layer headers, for example, layer 3 headers, in various embodiments, the process 1000 may implement a southbound, service primitive signaling to the MAC sublayer which downstream data packets are L4S packets. This service primitive may allow the MAC sublayer to identify the downstream L4S packets without requiring the MAC sublayer to process ECN-Capable Transport (ECT) bits in the IP headers of the downstream data packets at the MAC sublayer. In more embodiments, the process 1000 may generate a service primitive named, for example, "MA-UNITDATA.request", at a management interface, to signal which downstream data packets are the downstream L4S data packets to the MAC sublayer. The management interface, for example, a MAC-SAP or an MLME, may be configured between the higher protocol layer and the MAC sublayer. In additional embodiments, the process 1000 may add an L4S parameter or an ECN parameter to the "MA-UNITDATA.request" service primitive to indicate the downstream L4S data packets from among the plurality of downstream data packets received in the downstream data flow.

In further embodiments, the process 1000 may store the one or more downstream L4S data packets in a queue (block 1030). The process 1000 may store the one or more downstream L4S data packets in an L4S queue implemented, for example, in the MAC sublayer. In an embodiment, the process 1000 may employ one or more ECN classifiers in the higher protocol layer to classify the downstream L4S data packets for storage in one or more L4S queues in the MAC sublayer based on access categories. For example, the MAC sublayer may store the downstream L4S data packets for video (VI) data and best effort (BE) data in an L4S AC_VI queue and an L4S AC_BE queue, respectively.

In still more embodiments, the process 1000 may determine a count of the one or more downstream L4S data packets in the queue (block 1040). The process 1000 may continuously inspect and count the number of downstream L4S data packets stored in the L4S queue to determine a queue depth. The L4S queue may be dedicated hardware buffers utilized for storing the downstream L4S data packets. In still further embodiments, the process 1000 may determine the count of the downstream L4S data packets stored in the L4S queue by accessing the L4S queue through specialized driver interfaces or hardware performance counters. These driver interfaces or hardware performance counters may allow the lower protocol layer, for example, the MAC sublayer, to query the number of downstream L4S data packets stored in the L4S queue. In still additional embodiments, the process 1000 may determine a queue depth by accessing a data structure that stores the downstream L4S data packets awaiting transmission.

In some more embodiments, the process 1000 may determine whether a congestion is detected in the queue (block 1045). In yet various embodiments, the process 1000 may implement an L4S congestion detector in the MAC sublayer to detect a downstream congestion in each L4S queue. In yet more embodiments, the process 1000 may detect the downstream congestion based on queue depth. For example, the process 1000 may continuously inspect the queue depth and detect the downstream congestion if the queue depth is greater than or equal to a threshold count of data packets in the L4S queue. In still yet more embodiments, the process 1000 may configure the threshold count to maximize throughput. In many further embodiments, the process 1000 may employ minimum and maximum queue depth thresholds to detect the downstream congestion. If the queue depth is less than the threshold count, the process 1000 may determine that there is no downstream congestion in the L4S queue.

In response to determining a congestion is detected in the queue, in many additional embodiments, the process 1000 may update an MPDU of at least one downstream L4S data packet of the one or more downstream L4S data packets with a congestion indication control field as an indication of the detected congestion (block 1050). The process 1000 may update the MPDU, if the queue depth is greater than or equal to a threshold count of data packets in the L4S queue, which determines the congestion is detected in the L4S queue. The congestion indication control field may include a value indicative of the congestion associated with the downstream data flow. In still yet further embodiments, the congestion indication control field may also indicate a count of the downstream L4S data packets in the L4S queue that are experiencing the congestion, a percentage of downstream L4S data packets in the queue that are experiencing the congestion, or a probability of congestion being experienced for the downstream L4S data packets in the queue. For example, the congestion indication control field may further indicate a packet count to indicate how many data packets need to be marked with a congestion indicator at the wireless device. In many further embodiments, the downstream L4S data packet whose MPDU is updated with the congestion indication control field may be experiencing the congestion in the queue. In some more embodiments, the downstream L4S data packet, whose MPDU is updated with the congestion indication control field, itself may not be experiencing the congestion but may be ahead of another downstream L4S data packet that is experiencing the congestion. In such embodiments, the indication of the detected congestion can be transmitted prior to transmitting the another downstream L4S data packet that experiences the congestion.

In several embodiments, the process 1000 may transmit the MPDU to the wireless device as an indication of the detected congestion (block 1060). Since the downstream L4S data packets which experienced the congestion in the L4S queue are queued and encrypted already, these downstream L4S data packets cannot be marked for CE (ECN=11) in their IP headers at the MAC sublayer of the access point. Marking at the MAC sublayer may be a layering violation and may require these downstream L4S data packets to be dequeued, decrypted, and then marked. For faster congestion signaling, in several more embodiments, the process 1000 may utilize the MPDU to direct the wireless device to mark the downstream L4S data packets that are already in a transmit queue with a congestion indicator, at a lower protocol layer, for example, a MAC sublayer, of the wireless device, to transmit the congestion indicator faster to the network device that generated the downstream L4S data packets, so that the data rate can be scaled back sooner to avoid any packet drops. In numerous embodiments, the process 1000 may transmit the downstream L4S data packets to the wireless device after transmitting the indication of the detected congestion via the MPDU to the wireless device. In numerous additional embodiments, the MPDU may be configured to direct the STA 416 to mark at least one downstream L4S data packet with the congestion indicator.

However, in response to determining a congestion is not detected in the queue, in further additional embodiments, the process 1000 may transmit the one or more downstream L4S data packets to the wireless device (block 1070). When the process 1000 determines that the count of the one or more downstream L4S data packets in the L4S queue does not exceed the threshold count, the process 1000 may detect that there is no downstream congestion in the L4S queue. As such, the process 1000 may be able to process and deliver the one or more downstream L4S data packets in the L4S queue to the wireless device without experiencing the downstream congestion. Therefore, the process 1000 may proceed to transmit the one or more downstream L4S data packets in the downstream data flow to the wireless device without a congestion indication.

Although a specific embodiment for a process 1000 for forward signaling of downstream congestion by utilizing an MPDU indication suitable for carrying out the various steps, processes, methods, and operations described herein is discussed with respect to FIG. 10, any of a variety of systems and/or processes may be utilized in accordance with embodiments of the disclosure. For example, instead of utilizing an MPDU indication, the process 1000 may utilize probe response frames to transmit an indication of the detected congestion associated with the downstream L4S data flow. When the wireless device transmits a probe request to the access point, the access point can respond with a probe response frame that includes the indication of the detected congestion associated with the downstream L4S data flow. The elements depicted in FIG. 10 may also be interchangeable with other elements of FIGS. 1 - 9 and FIGS. 11 - 13 as required to realize a particularly desired embodiment.

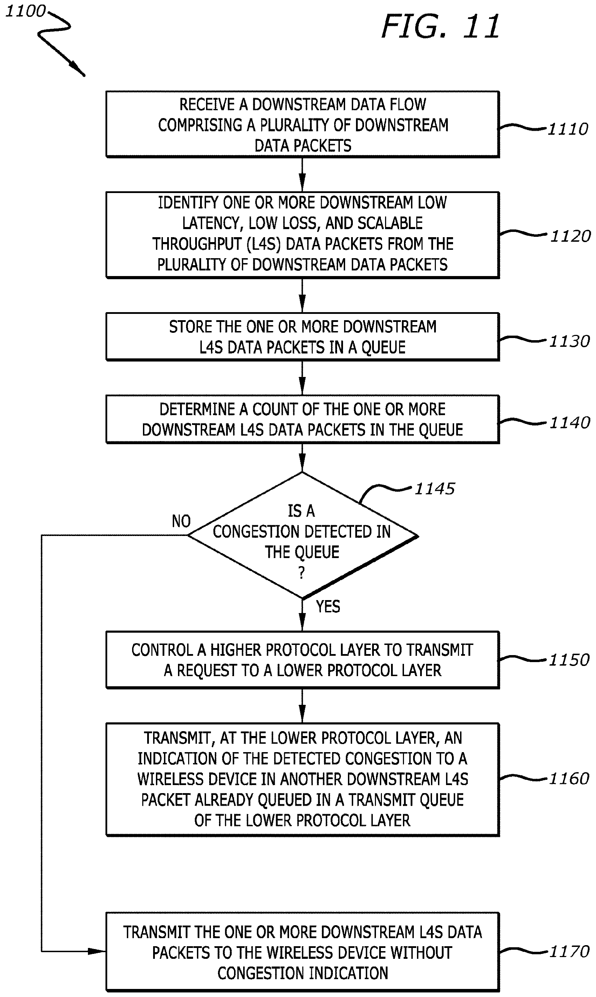

Referring to FIG. 11, a flowchart depicting a process 1100 for forward signaling of downstream congestion by utilizing a congestion indication control field in accordance with various embodiments of the disclosure is shown. In many embodiments, the process 1100 may receive a downstream data flow comprising a plurality of downstream data packets (block 1110). The downstream data flow may refer to network traffic coming from a network device such as a destination server and flowing in a downstream direction towards a wireless device such as a station (STA). The downstream data packets in the downstream data flow may include L4S data packets and non-L4S data packets. The downstream data flow including the downstream data packets may be received at the access point. In a number of embodiments, the process 1100 may receive the downstream data flow at a higher protocol layer implemented by the access point. The higher protocol layer may include layer 3, layer 4, or the like. Further, the higher protocol layer may implement one or more L4S queues.

In a variety of embodiments, the process 1100 may identify one or more downstream L4S data packets from the plurality of downstream data packets (block 1120). For example, the received downstream data packets may be classified and distinguished into L4S data packets and non-L4S/classic congestion control data packets to determine whether the data packets should be stored in the one or more L4S queues or non-L4S/classic queues in the higher protocol layer. The process 1100 may identify the downstream L4S packets by processing, for example, ECN-Capable Transport (ECT) bits in the IP headers of the downstream data packets. In further embodiments, the process 1100 may store the one or more downstream L4S data packets in the queue (block 1130). The process 1100 may store the one or more downstream L4S data packets in the L4S queue implemented, for example, in the higher protocol layer.

In still further embodiments, the process 1100 may determine a count of the one or more downstream L4S data packets in the queue (block 1140). The process 1100 may continuously inspect and count the number of downstream L4S data packets stored in the L4S queue to determine a queue depth. The L4S queue may be dedicated hardware buffers utilized for storing the downstream L4S data packets. In still additional embodiments, the process 1100 may determine the count of the downstream L4S data packets stored in the L4S queue by accessing the L4S queue through specialized driver interfaces or hardware performance counters. These driver interfaces or hardware performance counters may allow the higher protocol layer, for example, layer 3 or layer 4, to query the number of downstream L4S data packets stored in the L4S queue. In some more embodiments, the process 1100 may determine a queue depth by accessing a data structure that stores the downstream L4S data packets.

In yet various embodiments, the process 1100 may determine whether a congestion is detected in the queue (block 1145). In yet more embodiments, the process 1100 may implement an L4S congestion detector in the higher protocol layer to detect a downstream congestion in each L4S queue. In still yet more embodiments, the process 1100 may detect the downstream congestion based on queue depth. For example, the process 1100 may continuously inspect the queue depth and detect the downstream congestion if the queue depth is greater than or equal to a threshold count of data packets in the L4S queue. In many further embodiments, the process 1100 may configure the threshold count to maximize throughput. In many additional embodiments, the process 1100 may employ minimum and maximum queue depth thresholds to detect the downstream congestion. If the queue depth is less than the threshold count, the process 1100 may determine that there is no downstream congestion in the L4S queue.

In response to determining that a congestion is detected in the queue, the process 1100 may control the higher protocol layer to transmit a request to the lower protocol layer (block 1150). For example, the process 1100 may control the higher protocol layer to transmit a southbound, service primitive, for example, L4S-CONG_SIGNAL.request, to the lower protocol layer to indicate that the downstream L4S congestion is experienced at the higher protocol layer. The southbound service primitive may indicate a source address, a destination address, a direction of congestion, a priority associated with the downstream flow experiencing congestion, an SCSID of the downstream flow experiencing congestion, and/or a number of downstream L4S packets experiencing congestion.

In several embodiments, the process 1100 may transmit, at the lower protocol layer, an indication of the detected congestion to a wireless device in another downstream L4S packet already queued in a transmit queue of the lower protocol layer (block 1160). In an example, the lower protocol layer may implement one or more transmit queues in which downstream data packets can be buffered or queued for transmission. Thus, based on the request received at the lower protocol layer from the higher protocol layer indicating downstream L4S congestion, the process 1100 may update an MPDU of a downstream L4S packet already queued in the transmit queue with a congestion indication control field as an indication of the detected congestion. In other words, the process 1100 may update a layer 2 header of an already queued downstream packet and transmit, to the wireless device, the downstream packet with the updated layer 2 header. The updated layer 2 header may include the congestion indication control field indicative of a count of the downstream L4S data packets in the L4S queue that are experiencing the congestion, a value indicative of the congestion in the downstream, a percentage of downstream L4S data packets in the L4S queue that are experiencing the congestion, and/or a probability of congestion being experienced for the one or more downstream L4S data packets in the L4S queue. In still yet further embodiments, this downstream data packet(s) with the updated MPDU is transmitted prior to the downstream L4S data packets that are experiencing the congestion. The congestion indication control field may include, for example, an A-control subfield of an HE variant HT defined to carry layer 2 signaling of the L4S congestion. In an example, if three (3) downstream L4S packets have experienced downstream L4S congestion, three queued packets in the transmit queue at the lower protocol layer may get their layer 2 header updated to signal, in the A-control subfield, that these downstream L4S packets should be CE marked at the wireless device.

However, in response to determining a congestion is not detected in the queue, in several more embodiments, the process 1100 may transmit the one or more downstream L4S data packets to the wireless device without the congestion indication control field (block 1170). When the process 1100 determines that the count of the one or more downstream L4S data packets in the L4S queue does not exceed the threshold count, the process 1100 may detect that there is no downstream congestion in the L4S queue. As such, the process 1100 may be able to process and deliver the one or more downstream L4S data packets in the L4S queue to the wireless device without experiencing the downstream congestion. Therefore, the process 1100 may proceed to transmit the downstream data flow to the wireless device without the congestion indication control field.

Although a specific embodiment for a process 1100 for forward signaling of downstream congestion by utilizing a congestion indication control field suitable for carrying out the various steps, processes, methods, and operations described herein is discussed with respect to FIG. 11, any of a variety of systems and/or processes may be utilized in accordance with embodiments of the disclosure. For example, instead of updating a layer 2 header of at least one downstream L4S data packet with a congestion indication control field, in numerous embodiments, the process 1100 may utilize a higher protocol layer to update a higher protocol layer header such as a layer 3 header, a layer 4 header, or the like, with the congestion indication control field indicative of a count of downstream L4S data packets in the queue that are experiencing the congestion, prior to queuing. The elements depicted in FIG. 11 may also be interchangeable with other elements of FIGS. 1 - 10 and FIGS. 12 - 13 as required to realize a particularly desired embodiment.

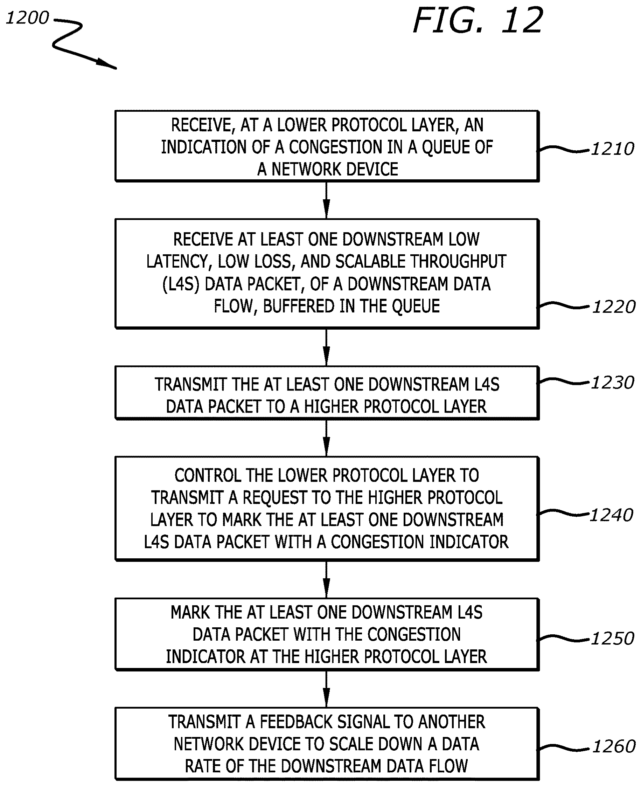

Referring to FIG. 12, a flowchart depicting a process 1200 for marking an indication of downstream congestion in accordance with various embodiments of the disclosure is shown. Downstream congestion may refer to congestion experienced in a queue that stores downstream data packets of a downstream data flow. The downstream data flow may come from a network device such as a destination server and flow in a downstream direction towards a wireless device such as a station (STA). The process 1200 may be implemented at the wireless device. In many embodiments, the process 1200 may receive, at a lower protocol layer, an indication of a congestion in a queue of a network device (block 1210). The lower protocol layer may include, for example, a layer 2 including a MAC sublayer, implemented in the wireless device. The process 1200 may receive the indication of the congestion at the lower protocol layer of the wireless device. The queue of the network device may buffer one or more downstream L4S data packets of the downstream data flow. In a number of embodiments, the process 1200 may receive the indication of the congestion through a congestion indication control field in an MPDU or at least one downstream L4S data packet. In a variety of embodiments, the congestion indication control field may be indicative of a packet count for marking with a congestion indicator.

In various embodiments, the process 1200 may receive at least one downstream L4S data packet, of the downstream data flow, buffered in the queue (block 1220). In more embodiments, the at least one downstream L4S data packet may experience the congestion in the queue. In additional embodiments, in the queue, the at least one downstream L4S data packet may be ahead of another downstream L4S data packet that experiences the congestion. The process 1200 may receive the at least one downstream L4S data packet at the lower protocol layer of the wireless device.

In further embodiments, the process 1200 may transmit the at least one downstream L4S data packet to a higher protocol layer (block 1230). The higher protocol layer may, for example, be layer 3, layer 4, or the like, of the wireless device. The higher protocol layer may be above the lower protocol layer. In still more embodiments, the at least one downstream L4S data packet may include layer 2 signaling implemented, for example, using an A-control subfield of an HE variant HT. The A-control subfield may be defined to carry layer 2 signaling of the congestion. The process 1200 may transmit the at least one downstream L4S data packet to the higher protocol layer to allow the higher protocol layer to mark the at least one downstream L4S data packet with the congestion indicator.

In still further embodiments, the process 1200 may control the lower protocol layer to transmit a request to the higher protocol layer to mark the at least one downstream L4S data packet with the congestion indicator (block 1240). As marking the at least one downstream L4S data packet with the congestion indicator at the lower protocol layer may be a layer violation, the process 1200 may control the lower protocol layer to transmit the request to the higher protocol layer to mark the at least one downstream L4S data packet with the congestion indicator. The at least one downstream L4S data packet, which may include the A-control subfield that carries layer 2 signaling of the congestion, can inform the higher protocol layer to proceed with marking the at least one downstream L4S data packet with the congestion indicator. The A-control subfield may also be indicative of a count of downstream L4S data packets in the queue that are experiencing the congestion, which can inform the higher protocol layer on the number of downstream L4S data packets to be marked. In still additional embodiments, the lower protocol layer may set a flag in an IP header of the at least one downstream L4S data packet to indicate to the higher protocol layer to mark at least one downstream L4S data packet with the congestion indicator.

In some more embodiments, the process 1200 may mark the at least one downstream L4S data packet with the congestion indicator at the higher protocol layer (block 1250). The higher protocol layer may mark the at least one downstream L4S data packet with the congestion indicator based on the request received from the lower protocol layer. The congestion indicator may include an ECN indicator indicative of a CE value. For example, the higher protocol layer may update the IP header by setting ECN=11 for that downstream L4S data packet(s). The marking of "11" may denote L4S CE, which may refer to an ECN marking for L4S traffic to signal the downstream congestion without causing significant delays.

In yet various embodiments, the process 1200 may transmit a feedback signal to another network device to scale down a data rate of the downstream data flow (block 1260). The other network device may, for example, be the destination server that generated the downstream L4S data packets. After the higher protocol layer marks the at least one downstream L4S data packet with the congestion indicator, the higher protocol layer may transmit the feedback signal to the network device. The feedback signal may signal to the network device to scale down a data rate or a rate of transmitting data to the wireless device. The network device may then adjust a data transmission rate, for example, reduce the data transmission rate, in response to the indicated downstream congestion, to reduce the downstream congestion. The devices and methods discussed herein allow the network device to quickly respond to the downstream congestion by allowing transmission of a faster downstream congestion notification to the network device.

Although a specific embodiment for a process 1200 for marking an indication of downstream congestion suitable for carrying out the various steps, processes, methods, and operations described herein is discussed with respect to FIG. 12, any of a variety of systems and/or processes may be utilized in accordance with embodiments of the disclosure. For example, instead of utilizing ECN = 11 as the congestion indicator, other bits utilized for legacy congestion notifications may be utilized for marking an indication of the downstream congestion. The elements depicted in FIG. 12 may also be interchangeable with other elements of FIGS. 1 - 11 and FIG. 13 as required to realize a particularly desired embodiment.

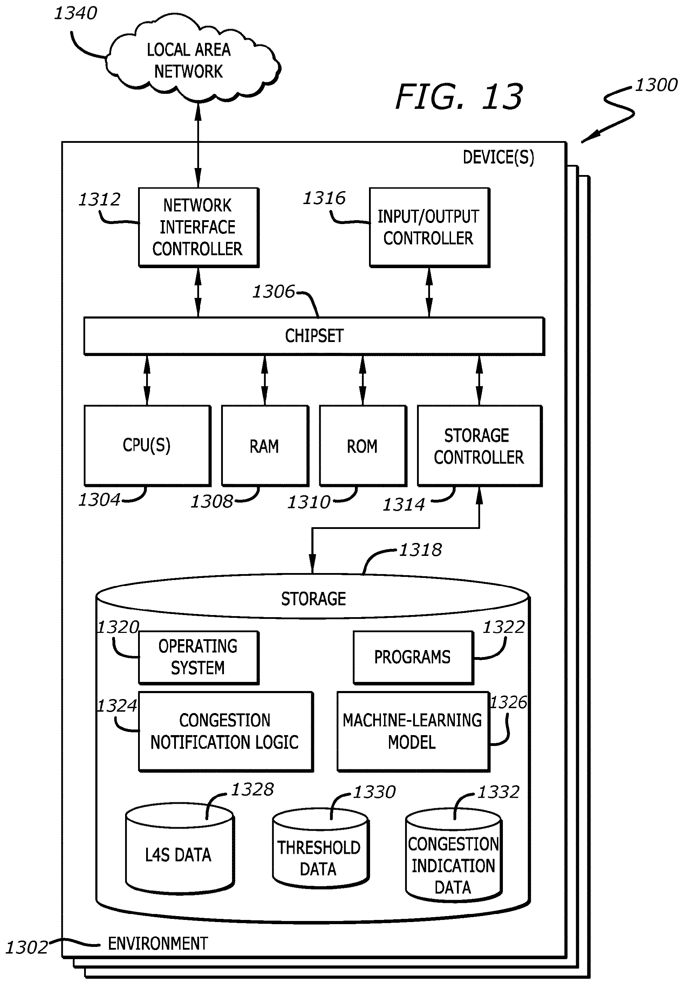

Referring to FIG. 13, a conceptual block diagram of a device 1300 suitable for configuration with a congestion notification logic 1324 for implementing the functionality and various embodiments of the disclosure is shown. The embodiment of the conceptual block diagram depicted in FIG. 13 can illustrate a conventional server computer, a workstation, a desktop computer, a laptop, a tablet, a network appliance, an electronic reader (e-reader), a smartphone, or other computing device, and can be utilized to execute any of the application and/or logic components presented herein. The device 1300 may, in some examples, correspond to a physical device or to a virtual resource described herein. The device 1300 can be a network device (for example, an access point, a switch, a controller, or a destination server), a wireless device such as a client device, or the like in accordance with various embodiments of the disclosure.

In many embodiments, the device 1300 may include an environment 1302 such as a baseboard or a "motherboard," in physical embodiments that can be configured as a printed circuit board with a multitude of components or devices connected by way of a system bus or other electrical communication paths. Conceptually, in virtualized embodiments, the environment 1302 may be a virtual environment that encompasses and executes the remaining components and resources of the device 1300. In a number of embodiments, one or more processors 1304 such as, but not limited to, central processing units (CPUs) can be configured to operate in conjunction with a chipset 1306. The processor(s) 1304 can be standard programmable CPUs that perform arithmetic and logical operations necessary for the operation of the device 1300.

In a variety of embodiments, the processor(s) 1304 can perform one or more operations by transitioning from one discrete, physical state to the next through the manipulation of switching elements that differentiate between and change these states. Switching elements generally include electronic circuits that maintain one of two binary states, such as flip-flops, and electronic circuits that provide an output state based on the logical combination of the states of one or more other switching elements, such as logic gates. These basic switching elements can be combined to create more complex logic circuits, including registers, adders-subtractors, arithmetic logic units, floating-point units, and the like.

In various embodiments, the chipset 1306 may provide an interface between the processor(s) 1304 and the remainder of the components and devices within the environment 1302. The chipset 1306 can provide an interface to a random-access memory (RAM) 1308, which can be utilized as the main memory in the device 1300 in several embodiments. The chipset 1306 can further be configured to provide an interface to a computer-readable storage medium such as a read-only memory (ROM) 1310 or a Non-Volatile RAM (NVRAM) for storing basic routines that can help with various tasks such as, but not limited to, starting up the device 1300 and/or transferring information between the various components and devices. The ROM 1310 or NVRAM can also store other application components necessary for the operation of the device 1300 in accordance with various embodiments described herein.

Different embodiments of the device 1300 can be configured to operate in a networked environment using logical connections to remote computing devices and computer systems through a network, such as the network 1340. The chipset 1306 can include functionality for providing network connectivity through a Network Interface Controller (NIC) 1312, which may include a gigabit Ethernet adapter or similar component. The NIC 1312 can be capable of connecting the device 1300 to other devices over the network 1340. It is contemplated that multiple NICs 1312 may be present in the device 1300, connecting the device 1300 to other types of networks and remote systems.

In more embodiments, the device 1300 can be connected to a storage 1318 that provides non-volatile storage for data accessible by the device 1300. The storage 1318 can, for example, store an operating system 1320, applications or programs 1322, L4S data 1328, threshold data 1330, and congestion indication data 1332, which are described in greater detail below. The storage 1318 can be connected to the environment 1302 through a storage controller 1314 connected to the chipset 1306. In additional embodiments, the storage 1318 can include one or more physical storage units. The storage controller 1314 can interface with the physical storage units through a Serial Advanced Technology Attachment (SATA) interface, a Fiber Channel (FC) interface, a Serial Attached SCSI (SAS) interface, where SCSI refers to a Small Computer System Interface, or other type of interface for physically connecting and transferring data between computers and physical storage units.

The device 1300 can store data within the storage 1318 by transforming the physical state of the physical storage units to reflect the information being stored. The specific transformation of physical state can depend on various factors. Examples of such factors can include, but are not limited to, the technology utilized to implement the physical storage units, whether the storage 1318 is characterized as primary or secondary storage, and the like. For example, the device 1300 can store information within the storage 1318 by issuing instructions through the storage controller 1314 to alter the magnetic characteristics of a particular location within a magnetic disk drive unit, the reflective or refractive characteristics of a particular location in an optical storage unit, or the electrical characteristics of a particular capacitor, transistor, or other discrete component in a solid-state storage unit, or the like. Other transformations of physical media are possible without departing from the scope and spirit of the present description, with the foregoing examples provided only to facilitate this description. The device 1300 can further read or access information from the storage 1318 by detecting the physical states or characteristics of one or more particular locations within the physical storage units.

In addition to the storage 1318 described above, the device 1300 can have access to other computer-readable storage media to store and retrieve information, such as program modules, data structures, or other data. It should be appreciated by those skilled in the art that computer-readable storage media is any available media that provides for the non-transitory storage of data and that can be accessed by the device 1300. In some examples, the operations performed by a cloud computing network, and or any components included therein, may be supported by one or more devices similar to the device 1300. Stated otherwise, some or all of the operations performed by the cloud computing network, and or any components included therein, may be performed by one or more devices 1300 operating in a cloud-based arrangement.

By way of example, and not limitation, computer-readable storage media can include volatile and non-volatile, removable and non-removable media implemented in any method or technology. Computer-readable storage media includes, but is not limited to, RAM, ROM, Erasable Programmable ROM (EPROM), Electrically-Erasable Programmable ROM (EEPROM), flash memory or other solid-state memory technology, Compact Disc-ROM (CD-ROM), Digital Versatile Disk (DVD), High Definition DVD (HD-DVD), BLU-RAY, or other optical storage, magnetic cassettes, magnetic tape, magnetic disk storage or other magnetic storage devices, or any other medium that can be utilized to store the desired information in a non-transitory fashion.

As mentioned briefly above, the storage 1318 can store an operating system 1320 utilized to control the operation of the device 1300. According to one embodiment, the operating system 1320 includes the LINUX operating system. According to another embodiment, the operating system 1320 includes the Windows^{®} server operating system from Microsoft Corporation of Redmond, Washington. According to further embodiments, the operating system 1320 can include the UNIX operating system or one of its variants. It should be appreciated that other operating systems can also be utilized. The storage 1318 can store other system or application programs and data utilized by the device 1300.

In still more embodiments, the storage 1318 or other computer-readable storage media is encoded with computer-executable instructions which, when loaded into the device 1300, may transform the device 1300 from a general-purpose computing system into a special-purpose computer capable of implementing the embodiments described herein. These computer-executable instructions may be stored as applications or programs 1322 and transform the device 1300 by specifying how the processor(s) 1304 can transition between states, as described above. In still further embodiments, the device 1300 has access to computer-readable storage media storing computer-executable instructions which, when executed by the device 1300, perform the various processes described above with regard to FIGS. 1 - 12. In still additional embodiments, the device 1300 can also include computer-readable storage media having instructions stored thereupon for performing any of the other computer-implemented operations described herein.

In some more embodiments, the device 1300 can also include one or more input/output controllers 1316 for receiving and processing input from a number of input devices, such as a keyboard, a mouse, a touchpad, a touch screen, an electronic stylus, or other type of input device. Similarly, an input/output controller 1316 can be configured to provide output to a display, such as a computer monitor, a flat panel display, a digital projector, a printer, or other type of output device. Those skilled in the art will recognize that the device 1300 may not include all of the components shown in FIG. 13, and can include other components that are not explicitly shown in FIG. 13, or may utilize an architecture completely different than that shown in FIG. 13.

As described above, the device 1300 may support a virtualization layer, such as one or more virtual resources executing on the device 1300. In some examples, the virtualization layer may be supported by a hypervisor that provides one or more virtual machines running on the device 1300 to perform functions described herein. The virtualization layer may generally support a virtual resource that performs at least a portion of the techniques described herein.

In yet various embodiments, the device 1300 can include a congestion notification logic 1324 that may be responsible for forward signaling of downstream congestion and upstream congestion. In yet more embodiments, the congestion notification logic 1324 may operate in the controller. In embodiments where the device 1300 corresponds to the access point, the congestion notification logic 1324 can be configured to perform various operations such as, but not limited to, receiving a downstream data flow including a plurality of downstream data packets; identifying one or more downstream L4S data packets from the plurality of downstream data packets; storing the one or more downstream L4S data packets in a queue; detecting a congestion based on the queue; and transmitting an indication of the detected congestion to a wireless device that is a destination of the one or more downstream L4S data packets. In still yet more embodiments where the device 1300 corresponds to the wireless device, the congestion notification logic 1324 can be configured to perform various operations such as, but not limited to, receiving an indication of a congestion in a queue of a network device, wherein the queue buffers one or more downstream L4S data packets of a downstream data flow; receiving at least one downstream L4S data packet of the one or more downstream L4S data packets buffered in the queue; and marking the at least one downstream L4S data packet with a congestion indicator based on the indication of the congestion.

Those skilled in the art will recognize that the congestion notification logic 1324 can include various hardware and/or software deployments and can be configured in a variety of ways. In many additional embodiments, the congestion notification logic 1324 can be configured as a standalone device, exist as a logic in another network device, be distributed among various network devices operating in tandem, or remotely operated as part of a cloud-based network management tool. In still yet further embodiments, one or more servers can be configured with the congestion notification logic 1324 or can otherwise operate as the congestion notification logic 1324. In still yet additional embodiments, the congestion notification logic 1324 may operate on one or more servers connected to a communication network, for example, the Internet. The communication network can include wired networks or wireless networks. The congestion notification logic 1324 can be provided as a cloud-based service that can service remote networks, such as, but not limited to, a deployed network. Further, in several embodiments, the congestion notification logic 1324 may be operated as a distributed logic across multiple network devices. In an embodiment, the controller can operate as the congestion notification logic 1324 or may have multiple devices operate as the congestion notification logic 1324 in a distributed manner.

In several more embodiments, the storage 1318 can include L4S data 1328. The L4S data 1328 may relate to data representative of data flows, for example, downstream L4S data flows and upstream L4S data flows. For example, the L4S data 1328 may include downstream data packets and upstream data packets included in their respective data flows. In numerous embodiments, the L4S data 1328 may allow identification of the downstream L4S data flows and the upstream L4S data flows for forward signaling of congestion detected at the access point.

In numerous additional embodiments, the storage 1318 can include threshold data 1330. The threshold data 1330 may relate to data representative of one or more threshold counts associated with one or more downstream L4S queues and upstream L4S queues. In further additional embodiments, the threshold data 1330 may be utilized by the congestion notification logic 1324 to detect the congestion in the downstream data flows and the upstream data flows.

In many embodiments, the storage 1318 can include congestion indication data 1332. The congestion indication data 1332 may relate to data representative of the congestion indicators, the ECN fields, and/or the MPDUs associated with the data flows. For example, the congestion indication data 1332 may include values such as CE values indicated in ECN indicators, values indicated in congestion indication control fields of the MPDUs, the congestion indicators marked by the wireless device, etc. In a number of embodiments, the congestion indication data 1332 may be utilized by the congestion notification logic 1324 to forward indicate and signal downstream and upstream congestion.

In a variety of embodiments, data may be processed into a format usable by a machine-learning ("ML") model 1326 (e.g., feature vectors), and or other pre-processing techniques. The ML model 1326 may be any type of ML model, such as supervised models, reinforcement models, and/or unsupervised models. The ML model 1326 may include one or more of linear regression models, logistic regression models, decision trees, Naïve Bayes models, neural networks, k-means cluster models, random forest models, and/or other types of ML models. The ML model 1326 may be configured to analyze the L4S data 1328, the threshold data 1330, and the congestion indication data 1332 for forward signaling of downstream congestion and upstream congestion. In various embodiments, the ML model 1326 may be utilized to identify various parameters to include in the L4S data 1328, the threshold data 1330, and the congestion indication data 1332. For example, the ML model 1326 may analyze the L4S data 1328, the threshold data 1330, and the congestion indication data 1332 and identify parameters that are required to augment the L4S data 1328, the threshold data 1330, and the congestion indication data 1332. Once the parameters are identified, the congestion notification logic 1324 may utilize the parameters to perform forward signaling of downstream congestion and upstream congestion. For example, the ML model 1326 may be configured to receive the L4S data 1328, the threshold data 1330, and the congestion indication data 1332. The congestion notification logic 1324 may then utilize trained models to forward signal downstream congestion and upstream congestion.

Although a specific embodiment for a device 1300 suitable for configuration with the congestion notification logic 1324 for carrying out the various steps, processes, methods, and operations described herein is discussed with respect to FIG. 13, any of a variety of systems and/or processes may be utilized in accordance with embodiments of the disclosure. For example, the device may be implemented in a virtual environment such as a cloud-based network administration suite or a cloud computing environment, or the device may be distributed across a variety of network devices such that each acts as a device and the congestion notification logic 1324 acts in tandem between the devices. The elements depicted in FIG. 13 may also be interchangeable with other elements of FIGS. 1 - 12 as required to realize a particularly desired embodiment.

Although the present disclosure has been described in certain specific aspects, many additional modifications and variations would be apparent to those skilled in the art. In particular, any of the various processes described above can be performed in alternative sequences and/or in parallel (on the same or on different computing devices) to achieve similar results in a manner that is more appropriate to the requirements of a specific application. It is therefore to be understood that the present disclosure can be practiced other than specifically described without departing from the scope and spirit of the present disclosure. Thus, embodiments of the present disclosure should be considered in all respects as illustrative and not restrictive. It will be evident to the person skilled in the art to freely combine several or all of the embodiments discussed here as deemed suitable for a specific application of the disclosure. Throughout this disclosure, terms like "advantageous," "exemplary," or "example" indicate elements or dimensions which are particularly suitable (but not essential) to the disclosure or an embodiment thereof and may be modified wherever deemed suitable by the skilled person, except where expressly required. Accordingly, the scope of the disclosure should be determined not by the embodiments illustrated, but by the appended claims and their equivalents.

Any reference to an element being made in the singular is not intended to mean "one and only one" unless explicitly so stated, but rather "one or more." All structural and functional equivalents to the elements of the above-described preferred embodiment and additional embodiments as regarded by those of ordinary skill in the art are hereby expressly incorporated by reference and are intended to be encompassed by the present claims.

Moreover, no requirement exists for a system or method to address each and every problem sought to be resolved by the present disclosure, for solutions to such problems to be encompassed by the present claims. Furthermore, no element, component, or method step in the present disclosure is intended to be dedicated to the public regardless of whether the element, component, or method step is explicitly recited in the claims. Various changes and modifications in form, material, workpiece, and fabrication material detail can be made, without departing from the spirit and scope of the present disclosure, as set forth in the appended claims, as might be apparent to those of ordinary skill in the art, are also encompassed by the present disclosure
Examples of the present disclosure are set out in the following numbered clauses:
1. A device, comprising:
   a lower protocol layer configured for one or more Layer 2 operations;
   a higher protocol layer above the lower protocol layer;
   a processor;
   a memory communicatively coupled to the processor; and
   a congestion notification logic configured to:
      receive a downstream data flow comprising a plurality of downstream data packets;
      identify one or more downstream Low Latency, Low Loss, and Scalable throughput (L4S) data packets from the plurality of downstream data packets;
      store the one or more downstream L4S data packets in a queue;
      detect a congestion in downstream based on the queue; and
      transmit, at the lower protocol layer, an indication of the detected congestion to a wireless device that is a destination of the one or more downstream L4S data packets.
2. The device of clause 1, wherein the congestion notification logic is further configured to receive, at the lower protocol layer from the higher protocol layer, a service primitive signaling that indicates which downstream data packet among the plurality of downstream data packets is an L4S data packet, and wherein the one or more downstream L4S data packets are identified based on the service primitive signaling.
3. The device of clause 2, wherein the service primitive signaling corresponds to an MA-UNITDATA.request primitive comprising at least one of an L4S parameter or an Explicit Congestion Notification (ECN) parameter.
4. The device of any preceding clause, wherein detecting the congestion based on the queue comprises:
   determining a count of the one or more downstream L4S data packets in the queue; and
   comparing the count of the one or more downstream L4S data packets with a threshold count, wherein the congestion is detected based on the count of the one or more downstream L4S data packets exceeding the threshold count.
5. The device of any preceding clause, wherein in a case where the queue is maintained at the lower protocol layer, transmitting the indication of the detected congestion comprises:
   updating a Media Access Control (MAC) Protocol Data Unit (MPDU) of at least one downstream L4S data packet of the one or more downstream L4S data packets with a congestion indication control field, wherein the congestion indication control field comprises the indication of the detected congestion; and
   transmitting the MPDU to the wireless device.
6. The device of clause 5, wherein the congestion indication control field is configured to indicate at least one of:
   a value indicative of the congestion in the downstream,
   a count of downstream L4S data packets in the queue that are experiencing the congestion,
   an L4S congestion marking probability that indicates a likelihood that one or more L4S data packets should be marked for congestion;
   a percentage of downstream L4S data packets in the queue that are experiencing the congestion or should be marked for congestion, or
   a probability of congestion being experienced for the one or more downstream L4S data packets in the queue.
7. The device of clause 5 or 6, wherein the at least one downstream L4S data packet experiences the congestion in the queue.
8. The device of any of clauses 5 to 7, wherein in the queue, the at least one downstream L4S data packet is ahead of another downstream L4S data packet that experiences the congestion.
9. The device of clause 8, wherein the indication of the detected congestion is transmitted prior to transmitting the another downstream L4S data packet that experiences the congestion.
10. The device of any of clauses 5 to 9, wherein the indication of the detected congestion in the MPDU directs the wireless device to mark the at least one downstream L4S data packet with a congestion indicator.
11. The device of any of clauses 5 to 11, wherein the MPDU comprises one of a data frame, a management frame, or a control frame.
12. The device of clause 11, wherein in a case where the MPDU comprises the management frame, the indication of the detected congestion is carried in a frame body of the management frame.
13. The device of any of clauses 5 to 12, wherein the congestion indication control field is included in a Layer 2 header of the MPDU.
14. The device of any preceding clause, wherein in a case where the queue is maintained at the higher protocol layer, the congestion in the downstream is detected at the higher protocol layer.
15. The device of clause14, wherein the congestion notification logic is further configured to control the higher protocol layer to transmit a request to the lower protocol layer based on the detected congestion, and wherein based on the request, the indication of the detected congestion is transmitted in another downstream L4S packet that is queued for transmission at the lower protocol layer and is different from the one or more downstream L4S data packets stored in the queue.
16. A wireless device, comprising:
   a processor;
   a memory communicatively coupled to the processor; and
   a congestion notification logic, configured to:
      receive an indication of a congestion in a queue of a network device, wherein the queue buffers one or more downstream Low Latency, Low Loss, and Scalable throughput (L4S) data packets of a downstream data flow;
      receive at least one downstream L4S data packet of the one or more downstream L4S data packets buffered in the queue; and
      mark the at least one downstream L4S data packet with a congestion indicator based on the indication of the congestion.
17. The wireless device of clause 16, wherein the indication of the congestion is received through a congestion indication control field in a Media Access Control (MAC) Protocol Data Unit (MPDU) of one of the at least one downstream L4S data packet or a management frame.
18. The wireless device of clause 16 or 17, further comprising a lower protocol layer and a higher protocol layer above the lower protocol layer, wherein the congestion notification logic is further configured to:
   receive the indication of the congestion at the lower protocol layer; and
   mark the at least one downstream L4S data packet with the congestion indicator at the higher protocol layer, wherein the congestion indicator comprises an Explicit Congestion Notification indicator indicative of a Congestion Experienced value.
19. The wireless device of clause 18, wherein the congestion notification logic is further configured to control the lower protocol layer to transmit a request to the higher protocol layer to mark the at least one downstream L4S data packet with the congestion indicator, and wherein the at least one downstream L4S data packet is marked with the congestion indicator at the higher protocol layer based on the request.
20. A method, comprising:
   receiving a downstream data flow comprising a plurality of downstream data packets;
   identifying one or more downstream Low Latency, Low Loss, and Scalable throughput (L4S) data packets from the plurality of downstream data packets;
   storing the one or more downstream L4S data packets in a queue;
   detecting a congestion in downstream based on the queue; and
   transmitting, at a lower protocol layer, an indication of the detected congestion to a wireless device that is a destination of the one or more downstream L4S data packets, wherein the lower protocol layer performs one or more layer 2 operations.
21. A method, comprising:
   receiving an indication of a congestion in a queue of a network device, wherein the queue buffers one or more downstream Low Latency, Low Loss, and Scalable throughput (L4S) data packets of a downstream data flow;
   receiving at least one downstream L4S data packet of the one or more downstream L4S data packets buffered in the queue; and
   marking the at least one downstream L4S data packet with a congestion indicator based on the indication of the congestion.
22. A computer readable medium carrying instructions which, when executed by one or more processors cause the method of any of clauses 20 to 21 to be carried out.

## Claims

1. A wireless access point, comprising:
a processor;
a memory communicatively coupled to the processor;
a Media Access Control (MAC) sublayer;
a higher protocol layer above the MAC sublayer;
the wireless access point operative to, at the MAC sublayer, perform operations comprising:
receiving indications of data units of a downstream data flow, the indications received via service primitive signaling via a management interface, the service primitive signaling comprising a low latency, low loss scalable throughput (L4S) parameter;
identifying L4S data units of the data units based on service primitive signaling;
queuing the data units in one or more downstream transmit queues;
monitoring for congestion associated with the data units identified as L4S data units; and
responsive to detecting congestion associated with the data units identified as L4S data units, causing an indication of congestion to be transmitted to a destination associated with the L4S data units.

2. The wireless access point of claim 1, wherein each data unit of the data units is a respective media access control (MAC) Service Data Unit (MSDU).

3. The wireless access point of claim 1 or claim 2 wherein the service primitive signaling comprises a MA-UNITDATA.request, the MA UNITDATA.request comprising the L4S parameter, optionally wherein the MA-UNITDATA.request further comprises:
one or more of: a source address, a destination address, a priority indicator, and/or a stream classification service identifier.

4. The wireless access point of any preceding claim, wherein at least one of the one or more downstream transmit queues is reserved for L4S data units.

5. The wireless access point of any preceding claim, the operations further comprising:
classifying the L4S data units into an access class of a plurality of access classes; wherein each L4S data unit is queued in a downstream transmit queue corresponding to a corresponding access class of the L4S data unit.

6. The wireless access point of any preceding claim, wherein monitoring for congestion associated with L4S data units comprises inspecting a queue depth of the one or more downstream transmit queues; and comparing the depth of the one or more downstream transmit queues to a threshold value.

7. The wireless access point of any preceding claim, the operations further comprising:
transmitting one or more management frames including an indication of L4S congestion indication capability.

8. The wireless access point of any preceding claim, the higher protocol layer operative to perform operations comprising:
receiving data units of the downstream data flow;
identifying L4S data units in the downstream data flow; and
wherein identifying L4S data units in the downstream data flow comprises detecting explicit congestion notification (ECN) indicators in the data units.

9. In a wireless access point, the wireless access point comprising a Media Access Control (MAC) sublayer; and a higher protocol layer above the MAC sublayer;
a method comprising:
receiving, by the MAC sublayer, indications of data units of a downstream data flow, the indications received via service primitive signaling via a management interface, the service primitive signaling comprising a low latency, low loss scalable throughput (L4S) parameter;
identifying, by the MAC sublayer, L4S data units of the data units based on service primitive signaling;
queuing, by the MAC sublayer, the data units in one or more downstream transmit queues;
monitoring, by the MAC sublayer, for congestion associated with the data units identified as L4S data units; and
responsive to detecting congestion associated with the data units identified as L4S data units, causing an indication of congestion to be transmitted to a destination associated with the L4S data units.

10. The method of claim 9, wherein each data unit of the data units is a respective media access control (MAC) Service Data Unit (MSDU).

11. The method of claim 9 or claim 10, wherein the service primitive signaling comprises a MA-UNITDATA.request, the MA UNITDATA.request comprising the L4S parameter, optionally wherein the MA-UNITDATA.request further comprises one or more of: a source address, a destination address, a priority indicator, and/or a stream classification service identifier.

12. The method of any of claims 9 to 11 wherein at least one of the one or more downstream transmit queues is reserved for L4S data units.

13. The method of any of claims 9 to 12, further comprising:
classifying, by the MAC sublayer entity, the L4S data units into an access class of a plurality of access classes; wherein each L4S data unit is queued in a downstream transmit queue corresponding to a corresponding access class of the L4S data unit.

14. The method of any of claims 9 to 13, wherein at least one of:
A. monitoring for congestion associated with L4S data units comprises:
inspecting a queue depth of the one or more downstream transmit queues, and
comparing the depth of the one or more downstream transmit queues to a threshold value;
B. the method further comprises:
transmitting one or more management frames including an indication of L4S congestion indication capability; and/or
C. the method further comprises:
receiving, by the higher protocol layer, data units of the downstream data flow, and
identifying, by the higher protocol layer, L4S data units in the downstream data flow, and
wherein identifying L4S data units in the downstream data flow comprises detecting explicit congestion notification (ECN) indicators in the data units.

15. A non-transitory computer readable storage medium comprising instructions that when executed configure one or more processors of a wireless access point comprising a Media Access Control (MAC) sublayer and a higher protocol layer above the MAC sublayer to perform operations comprising the method of any of claims 9 to 14.
